# EUROPEAN PATENT APPLICATION

(11) **EP 1 227 682 A1**
(43) Date of publication of application: **31.07.2002**
(21) Application number: 00971714.1
(22) Date of filing: 01.11.2000
(51) Int. Cl.: H04N 7/173

(54) **TELEVISION APPARATUS FOR STORAGE BROADCASTING, INFORMATION DISPLAY, DISTRIBUTING DEVICE, AND INFORMATION DISTRIBUTING METHOD**

(30) Priority: 05.11.1999 JP 31543099; 29.06.2000 JP 2000197186
(71) Applicant: Dentsu Inc., Chuo-ku, Tokyo 104-8426 (JP)
(72) Inventor: AKIYAMA, Ryuhei Dentsu Inc., Tokyo 104-8426 (JP); MAEDA, Hiroki Dentsu Inc., Tokyo 104-8426 (JP)
(74) Representative: Hitching, Peter Matthew
(86) International application number: JP0007687
(87) International publication number: WO0135665

(57) **Abstract**

A television system is provided with a storage means for a forced accumulation, the advertisement information is selectively received and accumulated therein. According to the present invention, a storagemeans 2 of a TV system 1 is accumulated with the advertisement information in addition to a variety of TV programs. The storage means is structured of an area that can be exclusively used and an area usable as a user intends. Mainly, the advertisement information provided free of charge by an entrepreneur and the life information necessary for a person to use for a life are selectively received and accumulated in the former area. A content of the advertisement information is properly automatically rewritten and can be viewed for 24 hours a day throughout the year, and hence the viewer can utilize the updated advertisement information free of charge at all times. An HDD of the storage means can be utilized for a receiving box spot of the E-commerce and for accumulating news items of the E-newspaper. A cost for providing the advertisement information is approximately 1/10 a cost for the conventional direct mails and about 1/8 a cost for the inserts.

## Description

### Technical Field

The present invention relates to a television broadcasting method and a system therefor in accumulation broadcasting that utilizes an ISDB system and other systems, and also relates to a broadcasting method and a television system, wherein an exclusive segmented storage area for a forced accumulation is provided beforehand in a storage means of a receiving device for the television broadcast, and this exclusive segmented storage area is mainly utilized.

### Background Arts

There has hitherto been proposed a system (Japanese Patent Laying-Open Application Publication No.9-55673) using a receiving device for ISDB (Integrated Service Digital Broadcasting) so that area-by-area information can be semi-automatically obtained from broadcasting signals. This system transmits the information (the area-by-area information) peculiar to the local area in addition to the broadcasting signals. A GPS (Global Positioning System) on the receiving side searches for the area-by-area information in accordance with an area code, and displays the same information. A scheme of thus obtaining the information (a weather chart, a map, a commercial etc) peculiar to the local area is proposed (paragraph Nos. 1 and 24).

Further, a scheme of extracting an item of information selected from among items of information transmitted by the same technology and storing the extracted information, is disclosed in Japanese Patent Laying-Open Publication Nos.9-214908 and 10-28243.

Moreover, there is a scheme (Japanese Patent Laying-Open Publication No.10-164527) wherein an address and a telephone number are utilized in order to extract a specified item of area information from within TV signals transmitted.

Still further, there is an invention (Patent No.2756483) of a method of registering the advertisement information, wherein a map is displayed based on map information previously stored, and a position of a advertisement object is specified on the map.

What is further known is a TV broadcasting system that will hereinafter be described. To start with, a central distribution station edits or gathers pieces of distribution information containing advertisements and, after time-division-multiplexing the same information, broadcasts the information to a multiplicity of receiving stations by utilizing satellites. A distribution information accumulating means of each receiving station selectively receives the information desired by the user from the distribution information in response to a receiving/selecting request of the viewer, and accumulates the received information. Then, each receiving station displays the information on the TV system in each home or output the information in voice thereto in response to a request from the viewer (Japanese Patent Laying-Open Publication No.8-293827).

In the conventional TV broadcast, the viewer watches a program selected based on a program guide from within the TV electronic waves televised from the broadcasting station. Then, in a private TV broadcasting station, a cost for producing the program and broadcast-related expenditures are financed from profits the advertisements. As a result, the viewers watches the program free of charge. The program described above is, however, continuously transmitted. Therefore, the viewer, though able to select the program itself, is unable to make a further choice in the program.

On the other hand, with advancements of the recent technologies related to the storage mediums, the accumulation capacity and the cost thereof are remarkably improved. It is therefore examined that the storage means is used in a device which has not used it so far, e.g., a receiving device of the television. As one example, the ISDB system and other systems are examined. Under such examinations, there is proposed a scheme in which the area-by-area information as disclosed in the prior arts described above is stored in the storage means of the TV receiver (the receiving device) , and the viewer extracts the information as the viewer intends. Such a highly advanced using mode is not, however proposed.

Moreover, according to the system disclosed in Japanese Patent Laying-Open Publication No.8-293827, the information is selectively received and accumulated in distribution information accumulating means of a multiplicity of receiving stations existing between the central distribution station and the home TV systems utilized by the viewers. The TV system is not, however, provided with the information accumulating means.

According to the prior arts described above, though the accumulation of, e.g., the advertisement information is taken into consideration, this scheme is nothing but being partial in content. Then, what is required with diversified concerns about the consumption is to provide the article information in greater detail and more easily. TV commercials at the present do not, however, perform a part of that role. Therefore, a contrivance is needed for the viewer to utilize the TV commercials and obtaining the information much easier than by the prior arts.

Further, the prior arts include a bidirectional information providing system. In this system, an information provider (e.g., the broadcasting station) transmits the information through on radio waves to the terminals (the TV receivers) of the consumers via a centralized management center (which may be a so-called consumer center including a database containing basic data of the consumers) . The consumer selects a desired item of information from among the information transmitted and transmits the selected information through a telephone line to the centralized management center. This system is a backbone system for the E-commerce. A problem is, however, that the operations of the line and the database cost too much.

### Disclosure of the Invention

The present invention is devised to obviate the problems described above. According to the present invention, the viewer becomes easier to utilize advertisement information and life information necessary for a person to use for a life which are forcedly accumulated in a television system in each home by using digital broadcasting waves, and to utilize the advertisement information and the life information necessary for the person to use for the life which are selected from within broadcasting signals.

Further, according to the present invention, for solving the defect inherent in the bidirectional information providing system described above, the viewer selectively receives (selective receipt) a favorite item of information from among pieces of information provided by an information provider, and the selected information is stored in an exclusive area of a storage means. Further, according to the present invention, the information selected from among pieces of information transmitted, is received, accumulated in a hard disk within the TV system, then edited, and watched as an accumulation-oriented broadcast. Therefore, the present invention is more than simply accumulating the normal broadcast and enjoying the broadcast later on.

To accomplish the above objects, a television system of the present invention according to claim 1 comprises storage means for storing information forcedly directly stored through on digital broadcasting waves (including BS ground waves, CATV, a telephone line etc), sorted according to codes. The viewer watches mainly the broadcast accumulated in the storage means. This scheme is therefore different from watching the normal TV broadcast.

Further, in the television system of the present invention according to claim 2, the information is life information necessary for a person to use for a life and an advertisement for providing the life information free of charge.

In the television system of the present invention according to claim 3, the storage means serves as a virtual showroom for an E-commerce or as a receipt box.

In the television system of the present invention according to claim 4, a part of the storage means is segmented for a forced accumulation as an exclusive area.

An accumulated information broadcasting method of the present invention according to claim 5 comprises making a viewer selectively receive a program through on digital broadcasting waves, directly forced storing the program in storage means of a television system, and broadcasting a content stored therein by an on-demand system.

In the accumulated information broadcasting method of the present invention according to claim 6, a content stored and invoked by the on-demand system is individually schemed. The scheme (edit) given herein implies that a broadcaster or viewer increases and enriches the content with an elapse of time in a way that makes the use of characteristics of a digital accumulation medium, or links text data, motion images and voices to each other so as to be reproducible as the broadcaster or viewer intends by a known hyper card (hyperlink) method, and a content database is created in the storage means. With this contrivance, the present invention produces a new value not possessed by the TV broadcasts so far. Further, for attaining this, a storage device or a control unit of the TV system for receiving the broadcast may include programming software capable of changing a sequence of stored programs by operating a remote controller.

The TV broadcast described above is a digital broadcast from a nationwide broadcasting station, wherein a content of the broadcast selected, e.g. , news, a weather forecast, traffic information etc is stored in the storage means such as a hard disk etc provided in the TV receiving device. The content of the broadcast to be recorded is not limited to the example given above and may be other programs. With respect to the information more immediate to the viewer such as the traffic information, the advertisement information etc and the life information required for the person to use for the life, necessary items are displayed on map information stored separately and thus viewed.

The present invention deals with an accumulation-oriented broadcast utilizing the information accumulated in a hard disk memory or a flash memory (which will hereinafter be simply called a memory) built in the digital television. This accumulation method is that in addition to the information described above, the information containing the accumulated advertisement information is rewritten properly, e.g., several times a day by use of the digital broadcasting waves. This accumulation-oriented broadcast can be watched for 24 hours a day throughout the year. Each of the viewers may be informed of pieces of information on the periphery of a resident area of the viewer such as time variations like morning, noon and night, weathers and seasons, a variety of events such as a local festival and an event of a self-governing body, accident information such as a fire, a flood damage etc, the traffic information such as congestion information etc, public information on a road construction, cleaning, a garbage collection, tax and so on, and shop information (advertisement information) such as opening of a new shop, a bargain, a fair etc in a way that scrolls the map within ranges of 2 km around, 5 km around and 10 km around as the necessity arises. Further, the programs of the accumulation-oriented broadcast contain, in addition to the information described above, news, a weather forecast, an entertainment program, a game, a virtual showroom, a digital direct mail, an interactive advertisement and a map-based advertisement.

Moreover, in addition to the above-mentioned, the storage means is stored with pieces of information such as encyclopedias, illustrated guides of floras, illustrated guides of fauna (which contain what takes such a form as to sequentially store the storage means with what is sent every week without being limited to the conventional book form), or manuals for ceremonial occasions, manuals for emergency such as a first aid , an earthquake, a disaster etc, which are not suited to the normal TV broadcasts. These pieces of information can be utilized at any time according to the necessity as in the case of the normal TV program. Namely, the present invention provides the TV system and the broadcasting method, wherein the broadcast concentrating more on the accumulated information than by the normal TV broadcast can be watched.

New categories of the advertisement that can be attained by using the memory described above, will hereinafter be outlined.

### Virtual Showroom

(1) An exclusive area segmented from the memory of the television receiver is rented to an advertiser charged a fee. The advertiser accumulates and saves enterprise information, article information and entertainment information of the company itself in the rented area within the memory.
   A fee for using the virtual showroom is determined based on a capacity of the memory in use, a using period and a position of a display index.
(2) Virtual Shop (TV Mall)
   If the television incorporates a backyard system of an up line etc, the virtual showroom becomes a virtual shop. At the virtual shop, the viewer can purchase a favorite article by operating a remote controller.
(3) Digital Direct Mail (Digital Insert)
   The digital direct mail is separated into an index and a text file as in the case of an E-mail on the Internet. The viewer clicks the index, whereby a favorite file can be invoked. The advertiser can send a program of motion images and a game by this digital direct mail
(4) Portal Advertisement
   In the television of nowadays, the remote controller is provided with a multiplicity of buttons, and there is a narrow space for newly providing a button for the accumulation-oriented broadcast. Therefore, channeling in the accumulation-oriented broadcast takes a mode of selecting an icon on the TV screen. A channel screen for the accumulation-oriented broadcast as a whole and a channel screen into which this channel screen is customized for the individuals and families, become a portal screen accessed at first by the viewer. An advertisement displayed on this channel screen is a portal advertisement.
(5) Mini-Program Advertisement
   A mini-program advertisement is a commercial inserted before and after the accumulated programs or between these programs as in the normal TV program. If a content of the program has a high popularity, a fee for the advertisement inserted increases.
(6) Map-Based Advertisement
   A map-based advertisement may be defined as an advertising system capable of invoking a file of related advertisement information by clicking icons of a shop and a facility on the map displayed on the TV screen.
(7) Hyperlink
   If the viewer has an interest in contents of the advertisements (3), (4), (5) and (6), the viewer can link to an integration of more detailed pieces of advertisement information of the advertisements (1) and (2) by clicking the advertisement in which the viewer has an interest as on a banner advertisement and a homepage on the Internet.
   If the viewer has an interest in the content of the advertisement, the viewer can obtain more detailed information by utilizing this system.
   If there is no up line, the viewer sets filtering by clicking an icon for requesting materials, and the detailed information that will be transmitted later on can be selectively received and accumulated. The up line herein is a line through which the information can be transmitted from the viewer side to the broadcaster side like the broadcasting station etc.

Further, if there is the up line, the viewer has the detailed materials sent by mail or can download them by transferring an intention of requesting the materials to a customer center and the advertiser.

Next, the E-commerce using this system will be explained.

If the viewer has an interest in the advertisements such as the advertisements (1) through (7) described above and in the article offered at the virtual shop, the order information can be transmitted via the up line by clicking the icon indicating a desire for purchasing on the screen.

Article properties such as clothing and ornaments are delivered to the purchasers by a transporting means like a home delivery. On the other hand, informational properties such as movies, music and games are distributed directly to the memories in the televisions . The memory serves as, so to speak, a receipt box in the E-commerce. In this case, the purchaser is charged a fee just when the purchaser watches and listens to the content accumulated or transfers the content to an external storage medium or a printer.

An advantage of this system is that troubles caused when purchasing are remarkably reduced. According to the system in which the purchaser downloads the content directly into the external storage medium or the printer, if the content purchased has a defect, it is unknown where the responsibility exits . The reason is that it can not be determined whether the trouble might have already existed when downloaded or the defect might have been caused just when transferred to the external storage medium. This seems to be a cause of dispute.

By contrast, according to a system in which the content is stored once on the hard disk and the purchased is charged a fee when watching and listening on a trail basis or when transferred, the purchaser can do so-called trial watching and listening. This system is hard to cause a trouble because of purchasing after confirming the content. Further, if the article as the purchaser orders does not come, the article can be sent back by deleting it intact.

The case explained in the previous paragraph is the system in which the article is sent responding to the order of the purchase requester, however, there can be considered a system in which the vendor transmit and accumulate some articles (information properties) to and in the memory, and the purchaser is charged a fee just when watching and listening to the article on the trial basis or transferring it to the external storage medium or the printer. This maybe a so-called Toyama's medicine vendor system in Japan.

What can be conceived as an applied version of this system is an "E-commerce broadcast". For example, this may be defined as a business taking an accounting system in which the whole of a radio program through on BS digital broadcasting waves is accumulated in the hard disk memory, and the purchaser is charged a fee when listening to this program and when stored on an MD (Mini Disk).

Further, this may also a business in which a movie program is accumulated when televised on TV broadcasting, and the purchaser is charged a fee when watching it and when recording it on the external storage medium such as a DVD (Digital Versatile Disk).

According to the present invention, the information in the storage means of the TV system, e.g., the content of the advertisement information as an accumulation-oriented broadcast program, is automatically rewritten several times a day. Then, the advertisement information can be watched for 24 hours a day throughout the year, and hence the viewer can utilize the updated advertisement information free of charge at all times.

A cost for providing the advertisement information is approximately 1/10 a cost for, e.g., the conventional direct mails and about 1/8 a cost for the inserts. The viewer can therefore receive a quick service at a lost cost, and this is advantageous to the entrepreneur.

Moreover, if, for instance, a HDD of the storage means of the TV system is used as a receipt box spot in the E-commerce, the consumer can easily purchase what is favorite by confirming the content thereof without waiting.

Further, the information inputted in place of the insert can serve as an advertisement for a sales promotion in the area covered by the TV broadcast.

For the advertiser, the costs for printing and delivering can be reduced as compared with the inserts and the advertisement on a telephone directory, a range of the advertisement can be set elaborately, and it is easy to perform an area-by-area sales promotion and to change a content of the advertisement.

Moreover, the above-mentioned advertising form utilizing the storage means of the TV system is novel, and it can be expected that a new market will be built up including the use of the receipt box in the E-commerce or E-newspaper and so on.

Still further, the information (content) accumulated in the storage means such as the hard disk etc within the TV system can be watched in a way that schemes (edits) the content as the user intends by a method using a hyper card etc.

### Brief Description of the Drawings

FIG. 1 is a diagram showing an outline of a first embodiment of the present invention;
FIG. 2 is a diagram showing a format of a transmission frame for transmitting advertisement information;
FIG. 3 is a schematic diagram showing a television system in the first embodiment of the present invention;
FIG. 4 is a diagram showing a hardware architecture of a television broadcasting system in a second embodiment of the present invention;
FIG. 5 is a diagram showing procedures of initializing the television in second embodiment of the present invention;
FIG. 6 is a diagram showing a structure of a file container;
FIG. 7 is a diagram showing a structure of a storage area of a set-top box 21 shown in FIG. 4;
FIG. 8 is a diagram showing a structure of a file management area shown in FIG. 7;
FIG. 9 is a diagram showing procedures of storing a content in an exclusive management area 35;
FIG. 10 is a diagram showing a content distribution management method in a content distribution server 81;
FIG. 11 is a flowchart showing a content distribution process executed by the content distribution server 81;
FIG. 12 is a flowchart showing a command receiving process executed by a set-top box 21;
FIG. 13 is a flowchart showing the command receiving process executed by the set-top box 21;
FIG. 14 is a diagram showing a model of a service for providing a data-oriented content;
FIG. 15 is a diagram showing a model of a service for providing a physical content;
FIG. 16 is a diagram a procedure (1) of accessing a virtual showroom in a third embodiment of the present invention;
FIG. 17 is a diagram a procedure (2) of accessing the virtual showroom in the third embodiment of the present invention;
FIG. 18 is a diagram showing a data-oriented content distribution method in the third embodiment of the present invention;
FIG. 19 is a diagram showing a data-oriented content utilizing method in the third embodiment of the present invention;
FIG. 20 is a diagram showing a customer information gathering method in a fourth embodiment of the present invention;
FIG. 21 is a diagram showing a structure of index information of the file container in a fifth embodiment of the present invention; and
FIG. 22 is a diagram showing a list of commands transmitted to the set-top box 21 from the content distribution server 81.

### Best Mode for Carrying out the Invention

Preferred embodiments of the present invention will hereinafter be described with reference to the drawings.

### <<First Embodiment>>

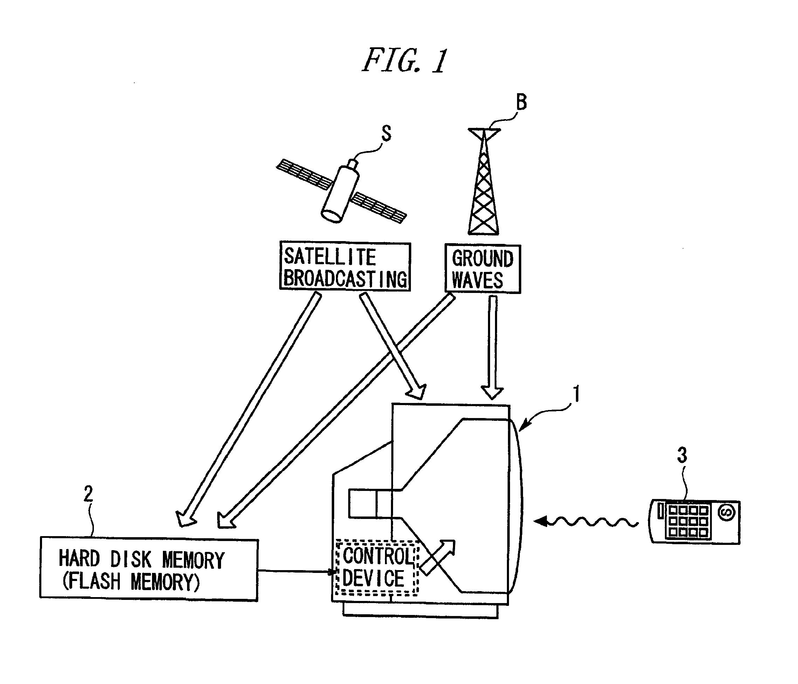

FIG. 1 is a view illustrating an outline of the present invention. Referring to FIG. 1, digital signals of television broadcasts (programs, advertisements etc) from a satellite S or a ground station B, are accumulated in a hard disk memory, a flash memory etc that are each defined as a storage means 2 provided in a television system 1 in each home or working place etc. This accumulation may take a system as disclosed in, for instance, Japanese Patent Application Laying-Open Publication No.8-293827. According to the present invention, however, the storage means 2 is provided within each TV system 1.

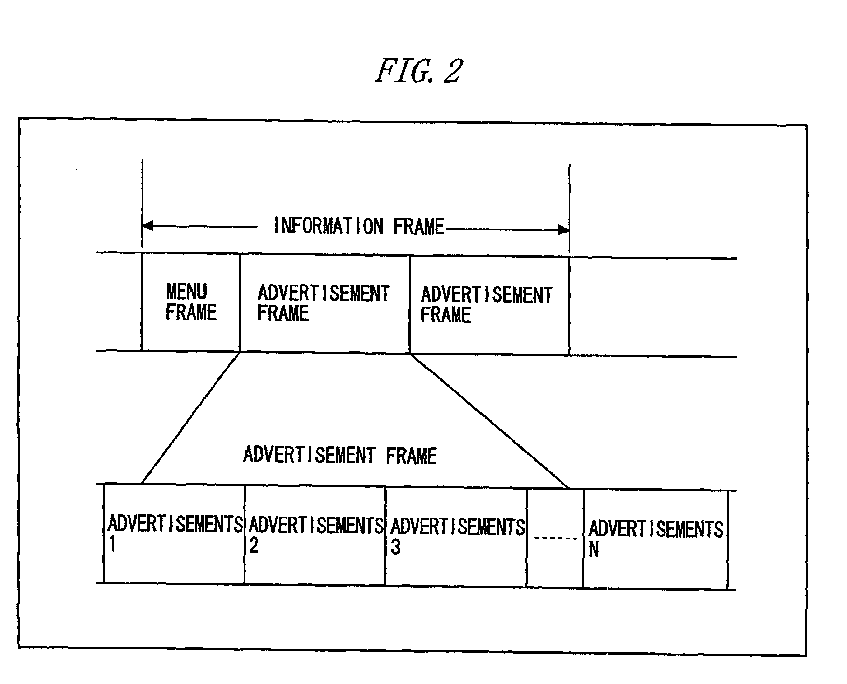

Referring to FIG. 2, program information from a broadcasting station is time-division-multiplexed and transmitted to the satellite. Each information frame in a transmission format thereof is structured of a plurality of programs and advertisement. In FIG. 2, the information based on the transmission format is transmitted from the satellite S or the ground station B. Then, the TV system 1 in each home selectively receives only the information (e.g., advertisements 1, 3) of an information frame (advertisement frame) specified beforehand by a user, and the received information is forcedly accumulated into the storage means 2 (exclusive area) of the TV system 1.

The following three methods are methods that can be considered for selectively receiving and accumulating the advertisements and contents.

Selective Receipt: this is a method of selectively receiving only the information suited to the TV concerned from various categories of information by use of a filtering function of the TV system 1, and accumulating the received information.

Selective Display: this is a method of selectively displaying only the information suited to the TV concerned from all of the various categories of information received and accumulated.

Selective Distribution: this is a method of previously creating a list of ID numbers of TVs to which the information is distributed, coding to a content the ID number of the TV to which the transmitter desires to transmit, and having a TV receiver having this ID number to selectively receive.

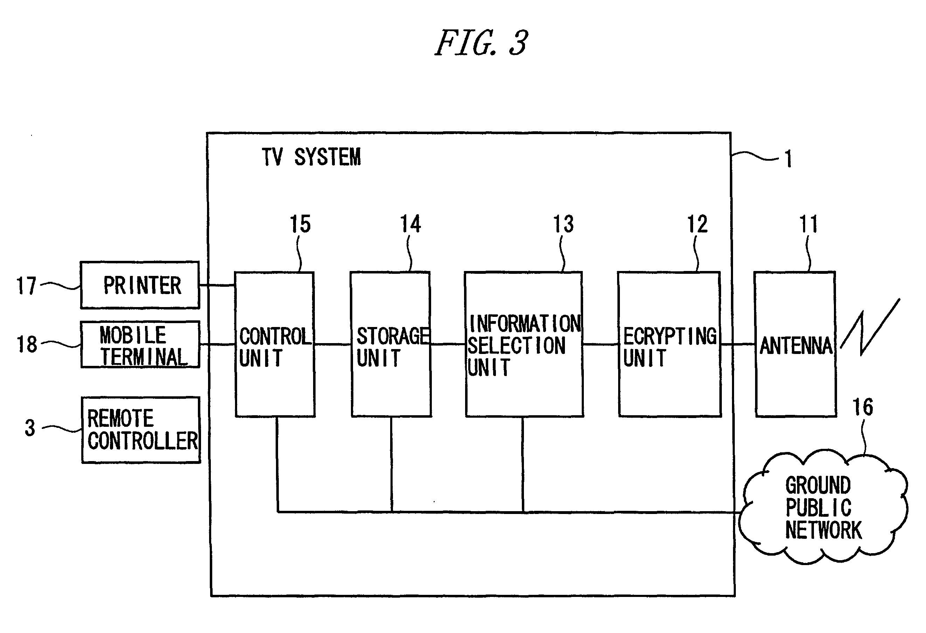

As shown in FIG. 3, the digital signals from the broadcasting station are encrypted and thus transmitted. A decoding unit 12 in the TV system 1 decodes the signals taken in through an antenna 11. The TV system 1 receives the information in a way that decrypts the encrypted signals, and an information selection unit 13 thereof judges using a code whether the received information should be forcedly accumulated. Then, the information, which should be forcedly accumulated, is accumulated in an area assigned for the forced accumulation in a storage unit 14 (It corresponds to storage means 2 in FIG. 1). A viewer is able to utilize, as the viewer intends, an area not used for the forced accumulation in the storage means 2. The viewer utilizes the accumulated information by displaying it together with voice information on the screen. The viewer, in the case of using the accumulated information as an insert or an electronic newspaper, prints the information by use of a printer 17. Further, in the case of the E-newspaper, the viewer can take only an article in a necessary field out of the storage unit 14, then store the article in a storage unit of a mobile terminal 18 such as a mobile computer, an electronic reader etc, and read it outside.

The viewer, when utilizing the system according to the present invention, inputs pieces of resident area information (e.g., a post code) to the storage means 2 of the TC system 1 through a remote controller 3. The remote controller 3 is provided with channel numbers, an accumulation broadcast call button, buttons for clicking symbols on the screen, and others. Further, the remote controller 3 may also be provided with a print key of the printer 17 for printing the display screen as the necessity arises. The TV system 1 receives the digital broadcasting waves from the broadcasting stations (local broadcasting stations, and broadcasting stations in the nationwide network) . Then, the TV system 1 selects, among those digital broadcasting waves, programs of, for example, news weather forecasts, traffic information and advertisements by use of the technologies disclosed in, e.g., Japanese Patent Application Laying-Open Publication Nos. 9-214875, 10-28243 and 10-164527. The TV system 1 stores the selected programs in the storage means 2 such as the hard disk etc within the receiving device. Further, the remote controller 3 of the TV system 1 has a function capable of clicking a cursor on the screen.

Moreover, the TV system 1 of the present invention incorporates a printer device or is connectable thereto. With this configuration, advertisement information within the local area, for instance, an advertisement of a certain shop in the local area, e.g., an insert with a coupon is accumulated in the storage means 2, and, when accumulated and broadcast (accumulated and watched) and if the user watching this sends a password number, the user wins the coupon. This scheme enables the system of the present invention to be utilized as a system for promoting sales of commercial articles.

The storage means 2 of the TV system 1 is segmented into the storage area for the forced accumulation of the contents and into, other than this area, the storage area usable by the viewer as the viewer intends.

The storage area for the forced accumulation is an exclusive area and is distinguished from the storage area usable by the viewer as the viewer intends. In addition to what serves as the storage means for the accumulation broadcast, this storage area for the forced accumulation can be used for a virtual showroom etc serving as an advertisement means launching into a recent scheme. The virtual showroom is defined as a large-capacity program, and hence its invariable module such as a structure or a showcase for articles is previously stored in the storage area for the forced accumulation. This arrangement may eliminate a process of transmitting a block having a large data size in the form of broadcasting waves, thereby decreasing a load on the transmission. Further, the information that will be transmitted later on is only, e.g., article information, thereby facilitating a replacement of the article information.

The storage means 2 described above may involve the use of, e.g., an HDD and a flash memory. For example, satellite digital broadcasting, ground wave digital broadcasting, CATV, a telephone line, the Internet and so on, may be exemplified as means for rewriting contents stored in these storage means from outside of the TV system 1.

Then, a part of content, e.g. , advertisement information, of the broadcast through on the digital broadcasting waves of the video broadcast and data broadcast, is accumulated in the storage area for the forced accumulation in the storage means 2 selected corresponding to the content of the broadcast. In this case, even when the TV system 1 remains off, the information accumulated in the storage means 2 can be rewritten as the viewer intends without troubling the viewer about operation. Further, a digital code is given to each item of advertisement information, whereby the advertisement information can be selectively received and displayed according to attributes of areas and consumers. Moreover, tags attached to the storage means 2 are attached also to each item of information, whereby the storage area for the forced accumulation in the storage means 2 can be partially updated.

The TV system 1 is provided with a circuit for displaying the selectively recorded program together with other category of information on the screen. As shown in FIG. 1, the viewer operates the remote controller 3, thereby making it possible to display the information on the recorded program such as news, weather forecasts, traffic information etc, the program guides provided with mails or showrooms etc, an area map displayed together with the present time and icons, advertisement screen and so on. Each item of information is attached with the tags and can be therefore pulled out by clicking the icon through the remote controller. The advertisement on the screen can be rewritten, for instance, several times a day on the basis of the forced accumulation.

The whole contents displayed on the above screen is disclosed and described in detail as the "life map" in Japanese Patent Application No.11-295233 filed by the present applicant.

Next, procedures of receiving services according to the present invention will be explained.

The viewer at first purchases the TV system 1 having the built-in memory (the storage means 2) for the forced accumulation as a receiving device, and sets this system in an operation state. Then, the viewer presses the accumulation broadcast call button of the remote controller, then indicates an intention about whether a selective broadcast service of the advertisement information is received or not, and switches over the circuit for this area in the control unit 15. This is changeable at all times. Next, the viewer inputs a post code, a telephone number, family members and so on to the storage means 2 (14) by use of the remote controller 3. The post code and the telephone number are used for obtaining various categories of information according to the area from the broadcasting waves. Further, questionnaires extracted from the broadcasting waves are answered, whereby likings and tastes of the consumers are registered.

Thereafter, the viewer can utilize free of charge other detailed advertisement information provided by the advertiser by an on-demand system, wherein the advertisement screen of the accumulation broadcast is clicked or the selection button of the remote controller is pressed.

Further, programs such as encyclopedias, illustrated guides of floras, illustrated guides of fauna, manuals for emergency, manuals for ceremonial occasions, which are not suited to the normal TV broadcasts, can be stored in the storage means 2 of the TV system 1. In this case, the viewer is able to utilize these encyclopedias, illustrated guides etc during the broadcasting of other program accumulated in the storage means 2, and can also use them by properly viewing when required to independently search.

Further, the viewer can watch the accumulated programs in a way that edits the order of the programs as the viewer intends. For attaining this, the storage means 2 or the control unit may be stored with software for editing. The viewer may invoke a list of the respective programs and input the order of the broadcasts by use of the remote controller.

Further, when the viewer selects an image linked based on a hyper card (hyperlink) method, a related motion image is displayed together with sounds.

The respective categories of data such as the likings, the tastes, the program choice and the advertisement choice of the viewer are repeatedly registered and thus accumulated in the storage means 2 of the TV system 1. Through this process, the TV system 1 becomes an individually characterized, so to speak, personalized TV system 1. This personalized TV system 1 is advantageous in terms of protecting the individual information.

On the other hand, the TV system 1 according to the present invention is individually utilized taking a time almost everyday, and therefore the contents accumulated in the storage means 2 may be defined as a cluster of information for clarifying the individual information and tastes. Accordingly, if irrespective of the above cost and the load in terms of the management, the data, after being accumulated to some extent (e.g., approximately once a year) , may be transmitted to a center computer at the district or center from the TV system 1. With this data transmission, it leads to a collection of the valuable information to create a database about the viewer by integrating the data, which is conceived effective. With this contrivance, this database itself turns out to bean analytic material for other article information and creates a value as a commercial article. Therefore, the TV system 1 incorporates the transmitting means, whereby pieces of information of the accumulated contents are transmitted via a public communication network (the telephone line).

The content of the information in the storage means 2 can be rewritten not through on the broadcasting waves but through the communication network such as the Internet etc. In this case, the TV system 1 needs connecting to the communication network. Therefore, the data are transmitted by utilizing ISDN (Integrated Services Digital Network) , an optical fiber network, DSL such as ASDL (Asymmetric Digital Subscriber Line) etc, CATV, amobile telephone network, aBluetooth-basednetwork, a wireless packet communication network and others.

Note that the broadcasting stations and the advertisers accumulate only the non-trouble information with respective responsibilities for steering clear of the problems of the copyrights and the rights to portraits which are related to the accumulations of the contents of the programs described above.

Further, if the TV system 1 is used by connecting it to the telephone line as another embodiment, the viewer enables the HDD etc (the area usable by the viewer as the viewer intends) serving as the storage means to be used as a receipt box for E-commerce. In this case, for instance, the contents such as a music CD, a movie DVD etc may be automatically , even partially, transmitted via, e.g., the Internet and accumulated from the vendor if the viewer himself or herself is not in home. Then, the viewer may take action of purchasing after selecting at any time. The consumer, for the time being, refers to the information accumulated without waiting and is thereby able to purchase only necessary items of information according to the individual likings. The article, e.g., the content of the video tape, can be confirmed based on whether this has been accumulated in the storage means or not (at least a part of the picture of the video tape can be confirmed by picturizing it. The viewer may be charged for the article just when the viewer draws the information of the article from the storage means.

This HDD etc can be utilized as the virtual showroom or a virtual shopping mall for E-commerce and can be also used for downloading the contents such as videos, music and games. The HDD may be defined as the so-called receipt box for the E-commerce.

If this receipt box is used, the informational property sent through on the digital broadcasting waves and via the Internet can be received at any time even when the very person is not in home or if not prepared for recording and saving.

The viewer checks whether the content accumulated in the hard disk has been well downloaded, and is thereafter be able to watch or record the content on an external medium such as a DVD.

Further, the information on the newspaper can be stored in the storage means 2 of the TV system 1 through the telephone line or through on the broadcasting waves. This is known as electronic newspaper. In this case, news items in various categories such as economy, homes and juveniles are synthesized and can thus be transmitted. The viewer can fetch and store, after being accumulated in the storage means 2, only the news items in the necessary fields according to the categories in other storage means, e.g., a mobile computer or reader, and can read these news items in, a train and so forth. Further, the viewer can read the news items printed by the printer means described above.

On the occasion of utilizing the present invention, some area of the storage means of the TV receiver can not be used as the exclusive area by the viewer. If an entrepreneur such as the advertiser etc using this system is burdened with a cost for the storage capacity of this area and a cost for software for filtering for the selective accumulation, the viewer does not have the economical burden.

### <<Second Embodiment>>

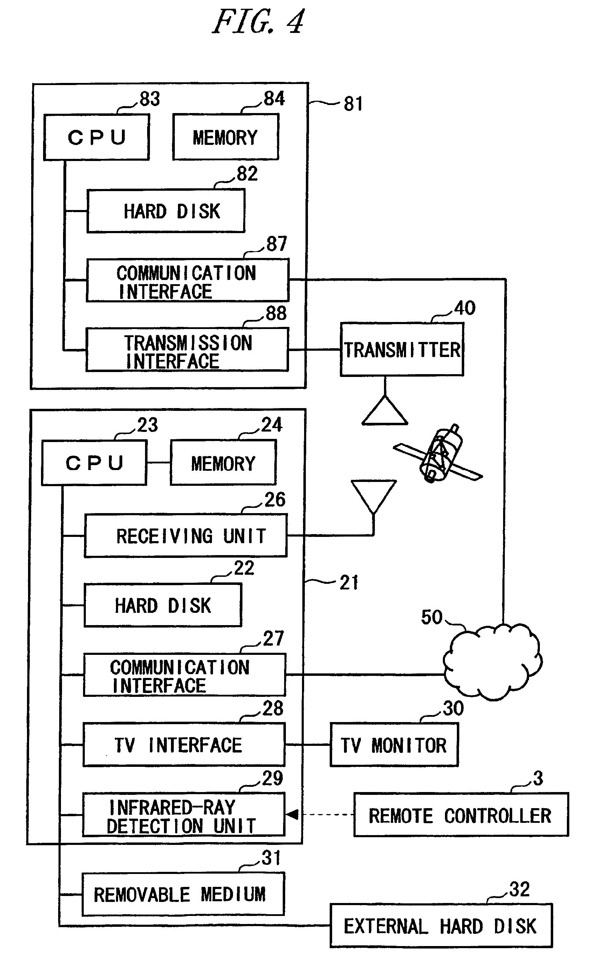

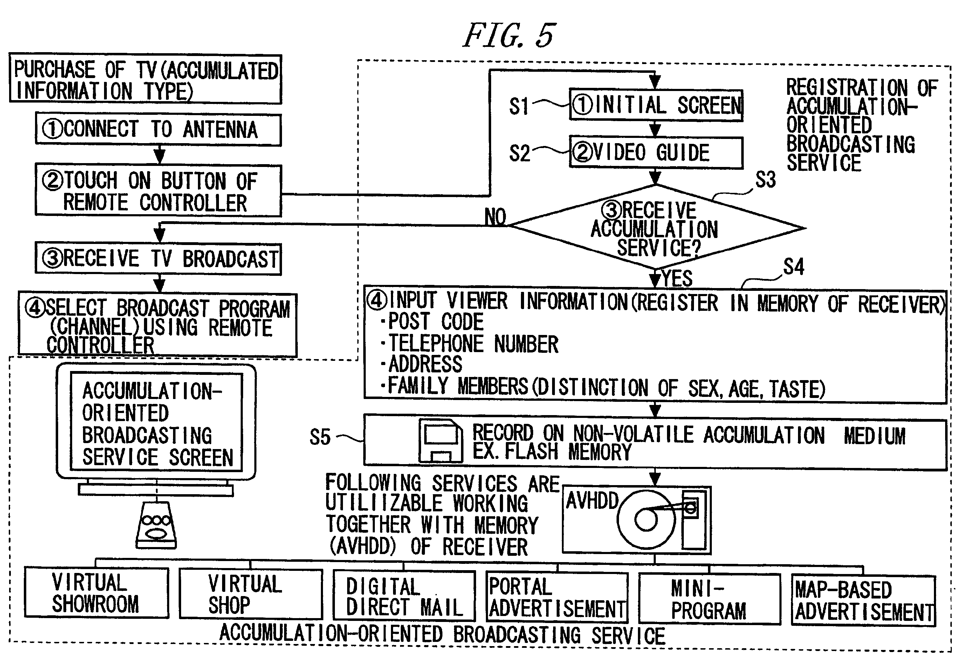

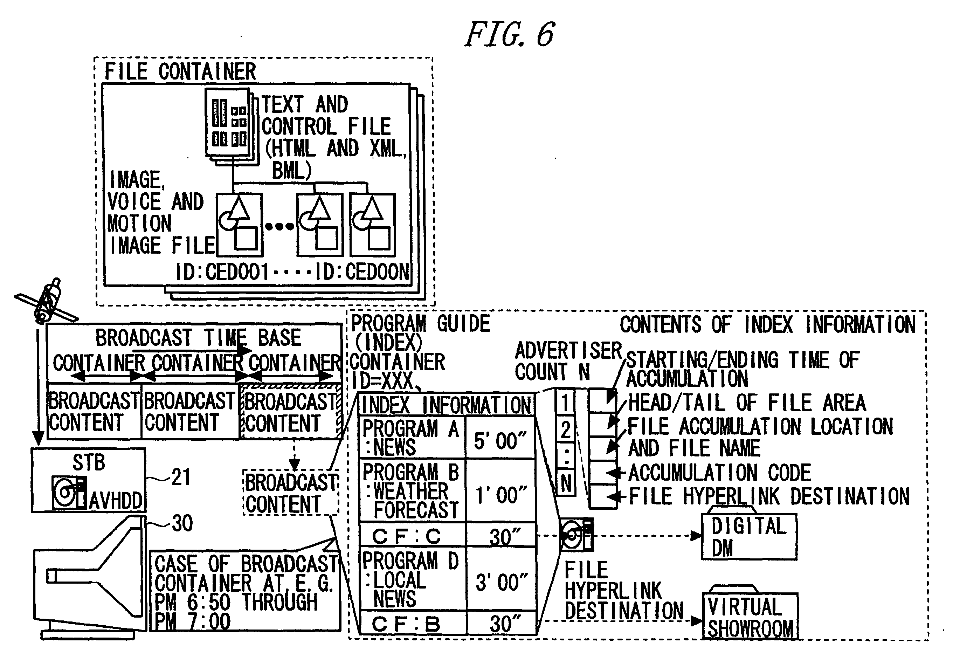

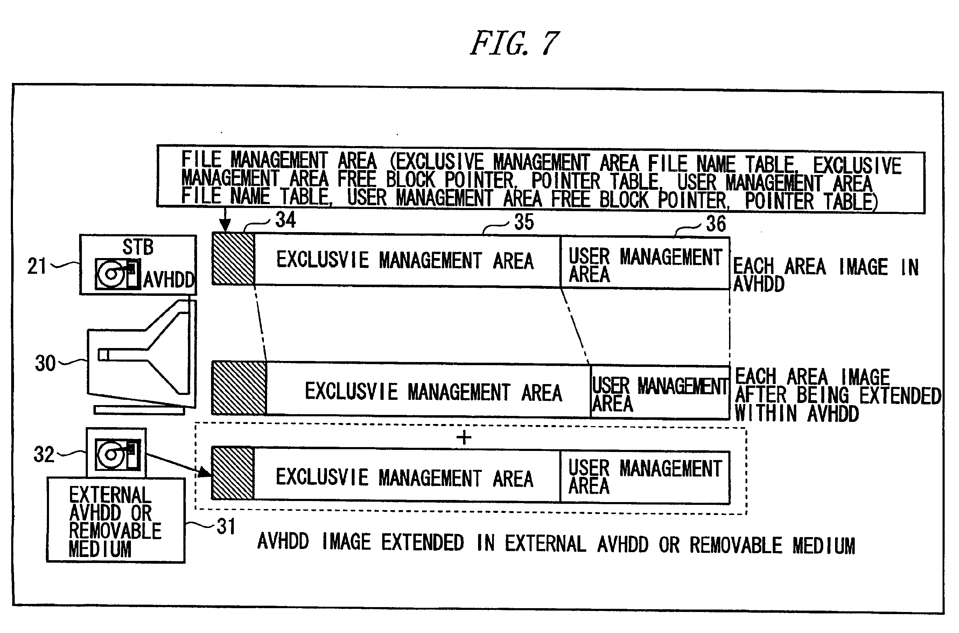

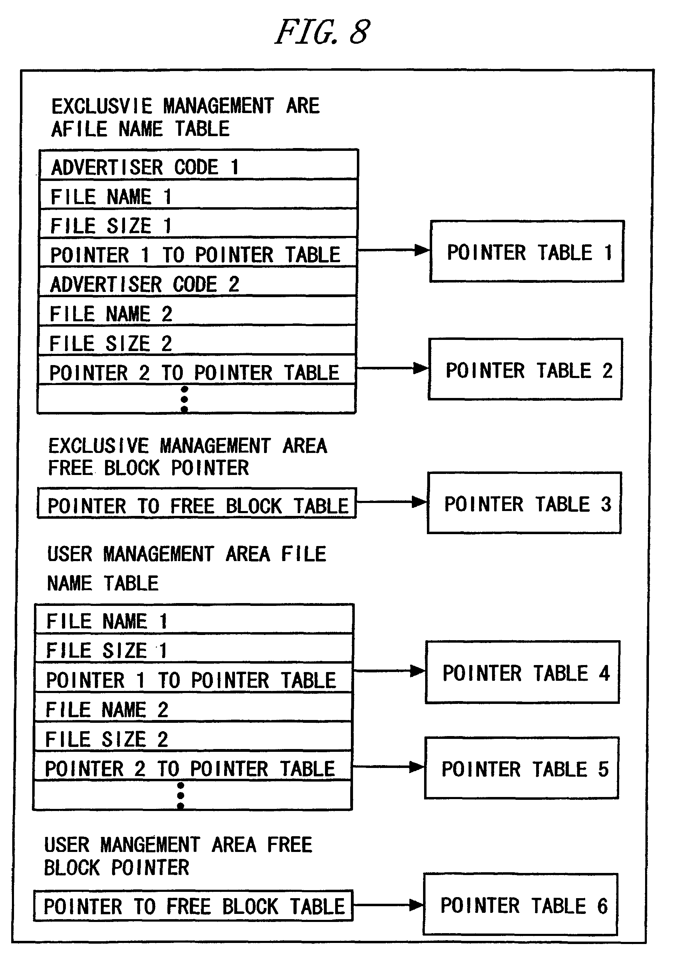

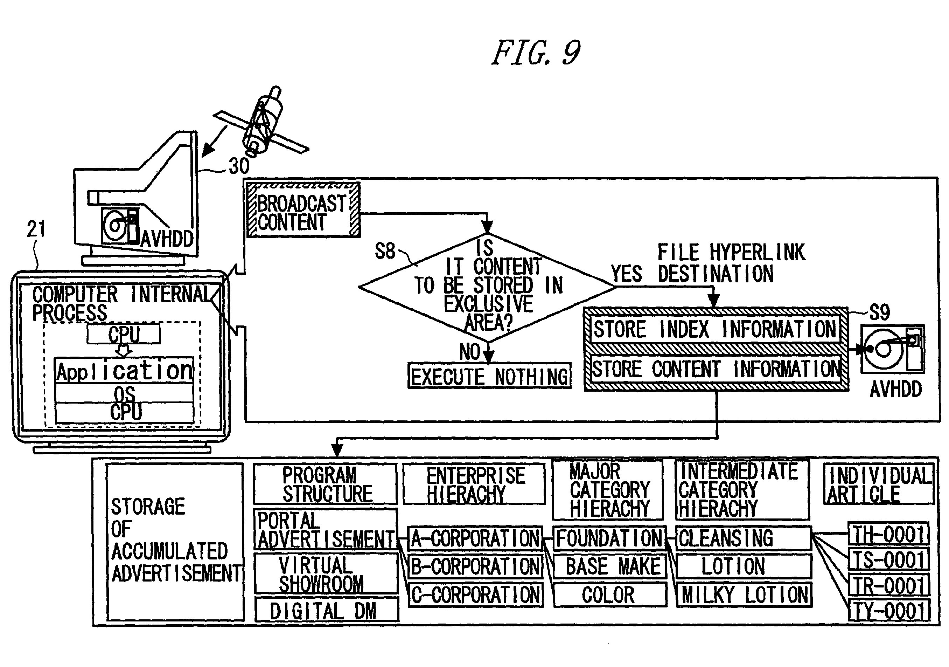

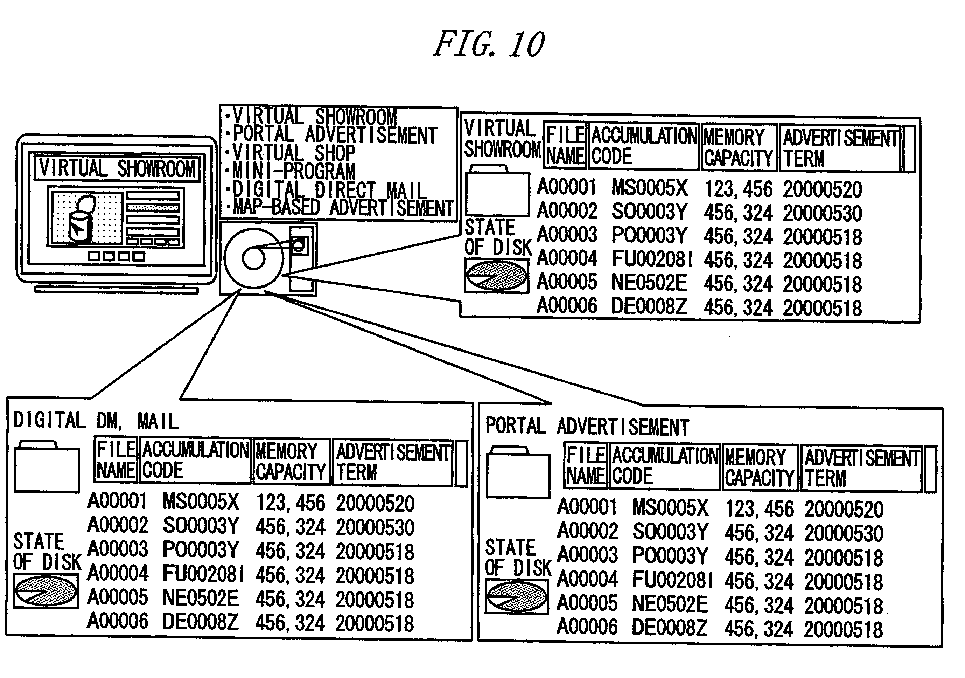

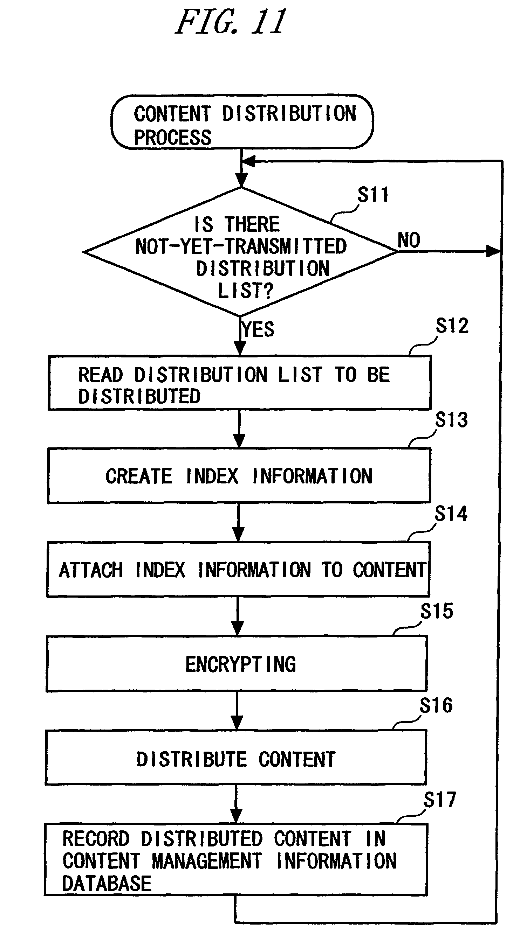

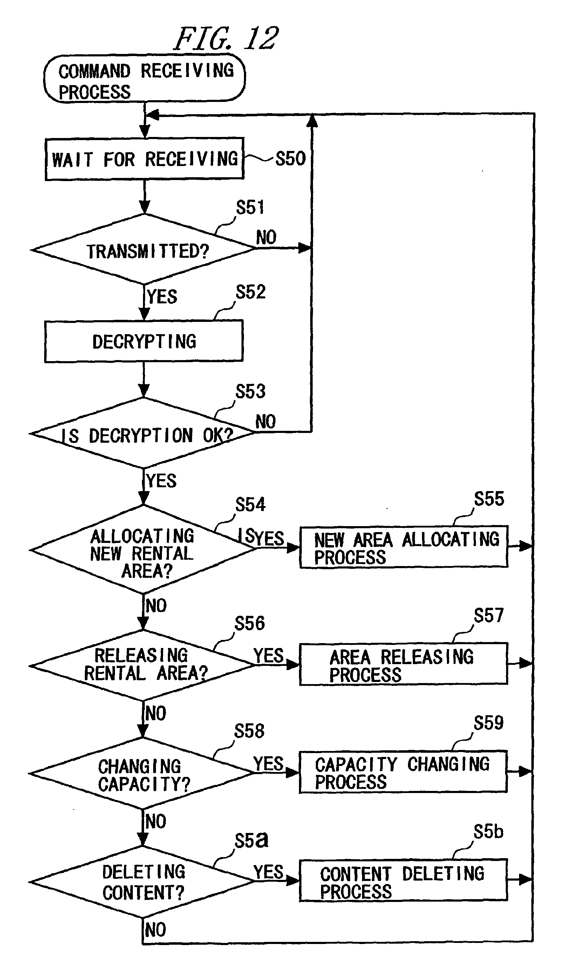

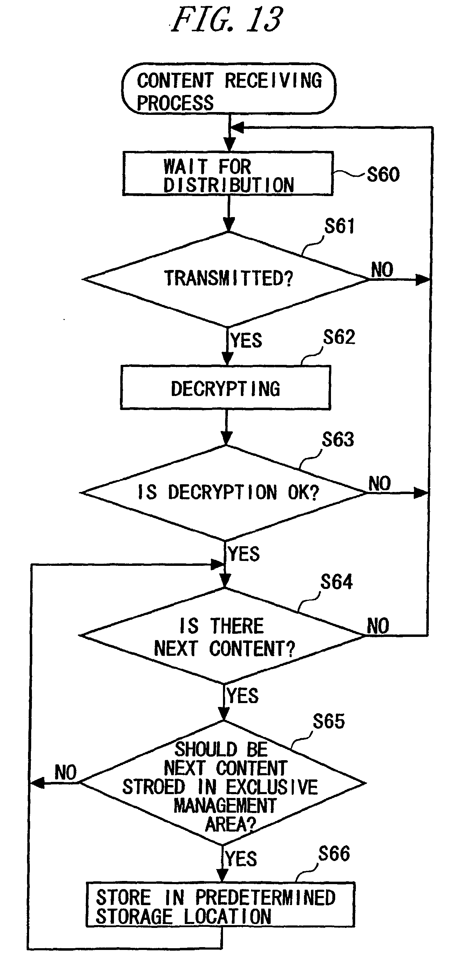

A second embodiment of the present invention will be described with reference to the drawings in FIGS. 4 through 13. FIG. 4 is a diagram showing a hardware architecture of a broadcasting system in the second embodiment of the present invention. FIG. 5 is a diagram showing initializing procedures of a television (which is a set-top box 21 illustrated in FIG. 4). FIG. 6 is a diagram showing a structure of a file container for distributing the contents to this television. FIG. 7 is a diagram showing a structure of a storage area of the set-top box 21. FIG. 7 is a diagram illustrating a structure of a storage area of the set-top box. FIG. 8 is a diagram showing a structure of a file management area shown in FIG. 7. FIG. 9 is a diagram showing procedures of storing contents in an exclusive management area 35 shown in FIG. 7. FIG. 10 is a diagram showing content management information retained by a content distribution server 81 shown in FIG. 4. FIG. 11 is a flowchart showing a content distribution process executed in the content distribution server 81. FIG. 12 is a flowchart showing a command receiving process executed in the set-top box 21. FIG. 13 is a flowchart showing a content receiving process.

### <Hardware Architecture>

FIG. 4 is the diagram showing the hardware architecture of the broadcasting system in the second embodiment of the present invention. This broadcasting system includes the content distribution server 81 (corresponding to a distribution device) for distributing the contents through on the satellite broadcast, the set-top box 21, a TV monitor 30 for outputting the content received by this set-top box 21, the remote controller 3 for operating the set-top box 21, a removable medium 31 connected to the set-top box 21, and an external hard disk 32.

The first embodiment has dealt with the TV system 1 having the memory (the storage means 2) for the forced accumulation. The discussion in the second embodiment will be focused on the broadcasting system replacing the TV system 1, wherein the television is constructed of the set-top box 21, the TV monitor 30 and the removable medium 31, and the content distribution server 81 distributes the contents to the television.

As illustrated in FIG. 4, the content distribution server 81 includes a CPU 83 for executing a content distribution program, a RAM for caching data and the program executed by the CPU 83, a hard disk 82 for recording control information when distributing the content to be distributed, a communication interface 87 for communications with the set-top box 21 via the network, and a transmission interface 88 for connecting the CPU 83 to a transmitter 40.

The CPU 83 executes the content distribution program, thereby providing a function as the content distribution server 81. For instance, the CPU 83 stores the content in the hard disk 82 and distributes the content in predetermined procedures . This distribution is carried out through an artificial satellite and the transmitter 40 connected to the transmission interface 88.

Further, the CPU 83 performs the bidirectional communications with the set-top box 21 via the communication interface 87.

The set-top box 21 includes a CPU 23 for executing a content receipt program and thus providing a function as the set-top box 21, a memory for caching data and the program executed by the CPU 23, a receiving unit 26 for receiving the data distributed via the artificial satellite, a hard disk 22 for storing the content contained in the data received, a communication interface 27 for the bidirectional communications with the content distribution server 81 via the network, a TV interface 28 for outputting the received content to a TV monitor 30, and an infrared-ray detection unit 29 for detecting an operation signal from the remote controller 3.

The CPU 23 executes the content receipt program, thereby providing the function as the set-top box 21. For example, the CPU 23 distinguishes between pieces of data received by the receiving unit 26, and stores necessary pieces of data in the hard disk 22. Moreover, the CPU 23, based on the operation on the remote controller 3, outputs the content stored in the hard disk 22 to the TV monitor 30 (corresponding to a display means) (the set-top box 21 and the TV monitor 30 correspond to an information display system or a television system).

Further, the CPU 23 performs the bidirectional communications with the content distribution server 81 via the communication interface 27.

The removable medium 31 and the external hard disk 32, which serve as extended storage areas, are connected to this set-top box 21. For example, a DVD-RW, a DVD-RAM, a CD-R, a CD-RW and a flash memory card can be each used as this removable medium 31.

### <Initialization>

FIG. 5 is a diagram showing procedures of initializing the television (the set-top box 21 shown in FIG. 4). The set-top box 21, upon setting as shown in FIG. 5 after being purchased, starts an accumulation-oriented broadcast service (which will hereinafter be simply called an accumulation service).

To start with, when the user touches a button on the remote controller 3 (abbreviated to RC in FIG. 5) after connecting the set-top box 21 to an antenna, the CPU 23 starts the initializing process. The remote controller 3 corresponds to a display indication means or an external operation means.

In this initializing process, the CPU 23 at first displays the unillustrated initializing screen (S1). Herein, the CPU 23, when detecting the user's selecting a video guide, moves to an unillustrated video guide screen (S2). In this video guide, the CPU 23 inquires of the user about whether the accumulation service is received or not.

The CPU 23, when detecting an indication that the accumulation service is unnecessary (NO in S3) as a reply to this inquiry, moves the set-top box 21 to a normal TV broadcast receiving mode.

On the other hand, the CPU 23, when detecting an indication that the accumulation service is desired (YES in S3) as a reply to that inquiry, moves the set-top box 21 to an accumulation broadcast receiving mode.

When moving to the accumulation broadcast receiving mode, the CPU 23 next has the user input viewer information such as a post code, a telephone number, an address, family members (containing distinctions of sexes, ages, tastes) (S4).

Next, the CPU 23 records the thus set content on the non-volatile accumulation medium (the hard disk 82) (S5). This non-volatile accumulation medium may, however, be a flash memory etc.

With the settings made so far, the set-top box 21 moves an accumulation-oriented receipt mode. According to the accumulation-oriented broadcast, various categories of contents are distributed at predetermined times and recorded on the hard disk 22 within the set-top box 21, the external hard disk 32 or the removable medium 31. The user can utilize the services such as a virtual showroom, a virtual shop, a digital direct mail, a portal advertisement, a mini-program advertisement or a map-based advertisement by invoking these contents to the TV monitor.

### <Structure of File Container in Distribution of Contents>

When the receipt of the accumulation-oriented broadcast is set with the above initialization, the set-top box 21 receives the content distributed at the predetermined time and records this content on the hard disk 22.

FIG. 6 is the diagram showing the structure of the file container for storing the contents when distributing the contents to this set-top box 21.

The file container is defined as distribution data containing one or more contents. According to the second embodiment, the content is transmitted in a way that encrypts the content on a file container basis, and is decrypted in the set-top box 21.

This file container has the content containing a container ID, an advertiser count, index information corresponding to the advertiser count, and advertisements and programs that correspond to the advertiser count.

The container ID is a number for uniquely identifying the file container.

The advertiser count is the number of requesters of the advertisements contained in the container. The advertiser (corresponding to a distribution requester or an information provider) is also a renter of the segmented area on the hard disk 82 built in the present set-top box 21. The advertisement contained in this file container is stored in a predetermined file on the hard disk 22 rented by this advertiser, or the removable medium 31 or the external hard disk 32.

The index information includes a starting time/ending time of storing each content, a head address/tail address of the file area, a file accumulating location and a file name, an accumulation code (corresponding to specifying information or control information), and a file hyperlink destination.

The starting time/ending time of the accumulation are an accumulation starting time and an accumulation ending time.

The head address/tail address of the file area indicate a head and a tail of the file within the hard disk.

The file accumulating location and the file name are a directory name and a file name used when storing the advertisement.

The accumulation code is a unique number for uniquely specifying the advertisement. According to the second embodiment, the accumulation code consists of 8 bytes. High-order 4 bytes correspond to a unique number for identifying the advertisement for every advertiser.

The file hyperlink destination is a URL (Uniform Resource Locator) indicating a accumulating location for the first screen data displayed for every advertisement.

As shown in FIG. 6, the advertisement requested from the advertiser and accumulated in the hard disk is, as in the case of the normal private broadcast, distributed in such a form that the advertisement is inserted between a program and a program.

The set-top box 21 reads the accumulation code after decrypting the file container, and judges whether it is the advertisement that should be accumulated in the hard disk 82. If judged to be the advertisement that should be accumulated, the set-top box 21 stores this advertisement in a specified file on the hard disk.

### <Structure of Storage Area>

FIG. 7 is a diagram showing a structure of the storage area of the set-top box 21. The storage area is herein a storage area provided by the hard disk 22, the external hard disk 32 or the removable medium 31. As shown in FIG. 7, the storage area includes a file management area 34, an exclusive management area 35 (corresponding to an exclusive area) and a user management area 36.

FIG. 8 shows a structure of the file management area 34. The file management area 34 includes a file name table and a free block pointer for each exclusive management area and each user management area.

The exclusive management area file name table is used for managing blocks of the file in the exclusive management area 35. Namely, the exclusive management area file name table has 4-tuple of an advertiser code (corresponding to a code, an identifier) , a file name, a file size and a pointer to a pointer table with respect to one file retaining the content such as the advertisement etc. Defining the advertiser code corresponds to a predefining.

The advertiser code is a unique numeral indicating the advertiser authorized to accumulate the content in the file concerned. If high-order 4 bytes (the advertiser code) of the accumulation code within the file container illustrated in FIG. 6 are coincident with this advertiser code, the content in the file container is accumulated in the file of the exclusive management area 35.

The file name is a file name of the file stored with the content such as the advertisement etc. The file size is a byte count of the file. The pointer to the pointer table is a pointer that points the head of the pointer table indicating the blocks structuring the file. This pointer table is broadly known as an i-node according to, e.g., UNIX system.

The exclusive management area free block pointer is a pointer pointing the head of the pointer table which connects the blocks in the free area contained in the exclusive management area 35.

A structure of the user management area file name table is substantially the same as that of the exclusive management area file name table except for such a point as to have no advertiser code.

A function of the user management area free block pointer is the same as that of the exclusive management area free block pointer.

The area operable by the user through the remote controller 3 is, however, a user management area 36. Contents in the exclusive management area file table are invisible to the user. The user is therefore unable to access the exclusive management area 35.

This exclusive management area 35 is defined when delivered from a company of manufacturing the set-top box 21 or when installing the set-top box 21 in user's home. Further, if the exclusive management area 35 is defined when delivered from the manufacturing company, the existing advertiser code is simultaneously set.

Moreover, the CPU 23 of the set-top box 21 defines the exclusive management area 35 in accordance with a command transmitted from the broadcasting station, and changes sizes of the exclusive management area 35 and of the user management area 36, or deletes the exclusive management area 35. Further, the set-top box 21 sets the advertiser code in the exclusive area file management table in accordance with the command transmitted from the broadcasting station. With this setting, the exclusive management area 35 of the set-top box 21 is exclusively used by a specified advertiser.

As shown in FIG. 7, the external hard disk 32 and the removable medium 31 of the set-top box 21 are used as extension areas of the built-in hard disk 82. Then, as in the case of the hard disk 82, the exclusive management areas are defined in the external hard disk 32 and the removable medium 82 as well.

The priority of the respective areas is in principle given such as the file management area > the exclusive management area > the user management area.

### <Storage of Content>

FIG. 9 is a diagram showing procedures of storing the contents (the accumulated advertisements) in the exclusive management area 35. The set-top box 21 decrypts the broadcast content received in the format of the filer container. Then, the set-top box 21 compares the accumulation code retained in the file container with the advertiser code in the exclusive management area 35, and thus judges whether it is the content that is to be saved in the exclusive management area 35 (S8). The set-top box 21 executing this judgement corresponds to a selecting means.

The set-top box 21, if the broadcast content is the content that is to be stored in the exclusive storage area 35, accumulates the content information together with the index information in the exclusive storage area 35 (S9).

As shown in FIG. 9, the accumulated advertisements are categorized according to a program structure, an enterprise-by-enterprise hierarchy, a major category hierarchy, an intermediate category hierarchy and an individual article hierarchy, and are thus stored. This hierarchy is known as a directory in UNIX system and in DOS-V of the personal computer.

The set-top box 21 stores the received contents in the files of hierarchies corresponding to a specified program structure (e.g., aportal advertisement), a specified advertiser (e.g., A-corporation), a specified major category (e.g., a foundation), a specified intermediate category (e.g., facial cleansing) , a specified individual article (e.g. , a type number TH-001).

### <Content Distribution Management>

FIG. 10 shows a content management information database (corresponding to a distribution management unit) managed by a content distribution server 81. The content distribution server 81, after distributing the contents to the set-top box 21, records the distributed contents in the content management information database, thereby managing an advertisement term and so on.

The content management information database are partitioned based on the respective program structures. The content distribution server 81 has the content management information database about each of, for instance, the virtual showroom, the virtual shop, the digital direct mail, the portal advertisement, the mini-program and the map-based advertisement.

The content management information database has a "file name" field, an "accumulation code" field, a "memory capacity" field and an "advertisement term" field.

The file name is a file name used for storing the distributed content in the set-top box 21. The accumulation code is an accumulation code stored in the index information within the file container in FIG. 6. The memory capacity is a data size of the content. The advertisement term is a time limit for which the advertisement is held in the set-top box 21.

### <List of Commands>

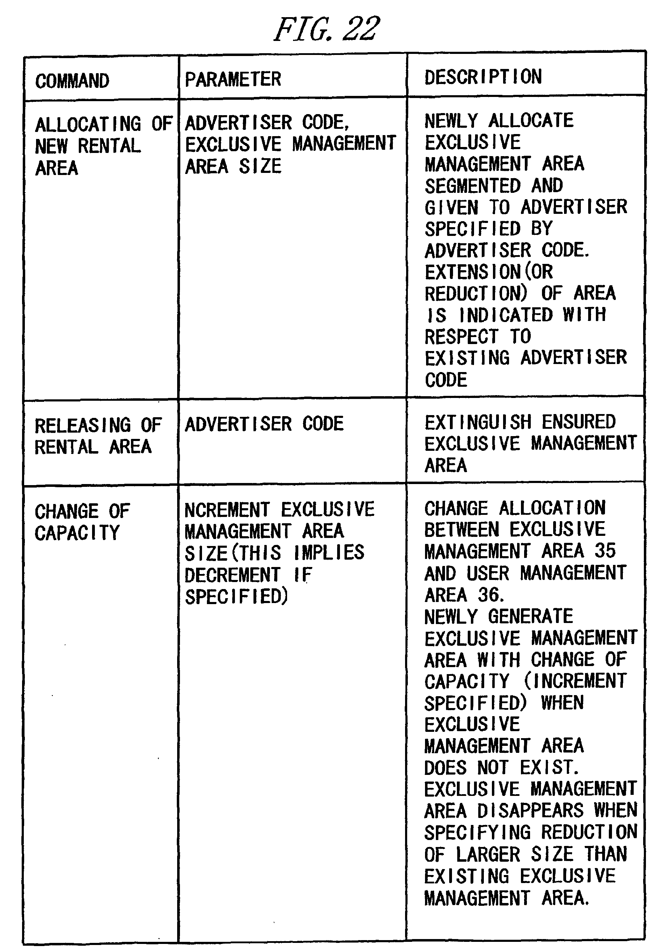

FIG. 22 shows a list of commands transmitted to the set-top box 21 from the content distribution server 81. These commands are transmitted by use of a free band of the digital broadcasting waves. The content distribution server 81 executes a batch process program, whereby the commands are transmitted in accordance with a command indication list unillustrated. A CPU 83 of the content distribution server 81 executing this batch process program corresponds to a segmentation indicating unit.

According to the second embodiment, "allocating the new rental area", "releasing the rental area" and "changing the capacity" are prepared as the commands.

The command "allocating the rental area" indicates that a new exclusive management area 35 segmented and given the advertiser specified by the advertiser code be ensured. This is an indication of extending the area (reducing the area in the case of an indication of a negative increment area) with respect to the existing advertiser code.

The command "releasing the rental area" indicates extinguishing the exclusive management area 35 ensured.

The command "changing the capacity" indicates changing an allocation between the exclusive management area 35 and the user management area 36. If the exclusive management area 35 does not exist, with this command "changing the capacity" (an indication of a positive increment area), the exclusive management area 35 is generated afresh. When specifying a reduction (an indication of a negative increment area) of a larger size than the existing exclusive management area, the exclusive management area 35 disappears.

### <Operation and Effect>

FIG. 11 shows processing steps of the content distribution processing program executed by the content distribution server 81. The CPU 83 of the content distribution server 81 executes this program, thereby providing a function as the content distribution server 81.

This program running on the CPU 83 monitors at all times whether there is a distribution list that is not yet transmitted (S11). A structure of the file container to be distributed is specified in this distribution list. To be specific, the distribution list has a container ID, an advertiser count, an accumulation code, a set of file names used for storing the contents, and advertisement terms of the respective contents.

If there is the not-yet-transmitted distribution list, the CPU 83 reads this distribution list (S12).

Next, the CPU 83 generates index information based on the distribution list (S13).

Next, the CPU 83 attaches this piece of index information to the content (S14).

Subsequently, the CPU 83 encrypts the content attached with the index information and creates the file container (S15).

Next, the CPU 83 distributes the thus created file container through the transmission interface 88 (S16).

Next, the CPU 83 records the distributed content in the content management information database shown in FIG. 10 (S17). Subsequently, the CPU 83 returns the control to S11.

FIGS. 12 and 13 show processing steps of a receiving program executed in the set-top box 21. The CPU 23 executes this program, thereby providing a function as the set-top box 21.

FIG. 12 is a flowchart showing a command receiving process. The command receiving process is a process of receiving from the broadcasting station an indication with respect to the storage area within the set-top box 21.

When executing this program, the CPU 23 comes to a status of waiting for receiving the command (S50, S51).

The CPU 23, when detecting a receipt of the command, decrypts this command (S52).

Next, the CPU 23 judges whether a decrypted result is normal (S53). This judgement is made by checking an error correction code after the decryption. If the decrypted result is abnormal, the CPU 23 judges that the procedure of encrypting the command transmitted is incorrect, then executes nothing and returns the control to S50. This is because it can be considered that the command transmitter is not authorized to transmit the command.

If the decrypted result is correct, the CPU 23 judges whether the command is "allocating the new rental area" or not (S54). If the command is "allocating the new rental area", the CPU 23 executes the new rental area allocating process (S55). The new rental area allocating process is a process of ensuring an area (a file for storing the content) for renting out the hard disk 82 to a new advertiser. Thereafter, the CPU 23 returns the control to S50.

Whereas if the command is not "allocating the new rental area", the CPU 23 judges whether the command is "releasing the rental area" (S56). If the command is "releasing the rental area", the CPU 23 executes a rental area releasing process (S57). The rental areal releasing process is a process of deleting the area (the file for storing the content) of the hard disk 82 that is rented to the advertiser. Thereafter, the CPU 23 returns the control to S50.

If the command is not "releasing the rental area", the CPU 23 judges whether the command is "changing the capacity" (S58). The CPU 23 a capacity changing process (S59). The capacity changing process is a process of changing an allocation between the exclusive management area 35 and the user management area 36. Thereafter, the CPU 23 returns the control to S50.

If the command is not "changing the capacity", the CPU 23 judges whether the command is "deleting the content" (S5a). If the command is "deleting the content", the CPU 23 executes a content deleting process (S5b). The content deleting process is a process of deleting the content of which the advertisement term has expired. Thereafter, the CPU 23 returns the control to S50.

Whereas if the content is not "deleting the content", the CPU 23 executes nothing and returns the control to S50.

FIG. 13 is a flowchart showing the content receiving process. The CPU 23, when executing this process, at first comes to a wait-for-distribution status (S60, S61).

The CPU 23, when detecting a transmission of the file container, decrypts this file container (S62).

Next, the CPU 23 judges whether a decrypted result is normal (S63). If the decrypted result is abnormal, the CPU 23 judges that the procedure of encrypting the file container distributed is incorrect, then executes nothing and returns the control to S60. This is because it can be considered that the content transmitter is not authorized to transmit the content.

If the decrypted result is correct, the CPU 23 judges whether there is a content that should be stored next (S64). If the there is not the content that should be stored next, the CPU 23 returns the control to S60.

If there is the content that should be stored next, the CPU 23 collates the accumulation code of the index information with the advertiser code in the exclusive management area file name table. Then, the CPU 23 judges whether the next content is a content that should be stored (S65). If the next content is not the content that should be stored, the CPU 23 returns the control to S64.

When judging in S65 that the next content is the content that should be stored, the CPU 23 stores the content in a predetermined accumulating location (a file in the exclusive management area 35) (S66). Thereafter, the CPU 23 returns the control to S64.

As discussed above, the content distribution server 81 in the second embodiment distributes the content together with the specified accumulation code (the advertiser and the advertisement code) as the distribution list indicates. Then, the accumulation code and the content distributed are recorded together with the advertisement term in the content management information database. Accordingly, this content distribution server 81 is capable of managing the areas of the set-top box 21 and the hard disk 22 of the distributing destination.

Moreover, the television (the set-top box 21) in accordance with the second embodiment executes, based on the commands transmitted from the broadcasting station, changing the capacity of the exclusive management area 35 of the hard disk 22 etc, allocating the file to the specified advertiser, deleting the allocated file and deleting the content. Further, this television collates the accumulation code of the content distributed with the advertiser code of the file in the exclusive management area 25, and stores the exclusive management area 35 with only the content that should be stored. Therefore, in this content distribution server 81 and the set-top box 21, the advertiser can occupy the area of the hard disk 22 built in the set-top box 21, the external hard disk 32 or the removable medium 31. Namely, the area of the hard disk 22 etc can be rented to the advertiser.

### <Modifications of Hardware Architecture>

According to the second embodiment, the television is constructed of the set-top box 21 and the TV monitor 30, wherein the accumulation-oriented broadcast is stored in the exclusive inhibition area of the hard disk 22 in the set-top box 21, the external hard disk 32 or the removable medium 31. The embodiment of the present invention is not, however, limited to this architecture. For instance, the television maybe constructed such that the TV monitor is integral with the receiving unit as in the case of the TV system 1 illustrated in the first embodiment. In this case, the storage area may be the hard disk within the TV system 1, or the external hard disk. Further, a personal computer having the function of receiving the TV broadcast may also be used.

Moreover, the content may be distributed to a PDA (Personal Digital Assistant) as a substitute for the TV system 1 via the network, and the accumulation-oriented broadcast may thus be provided. Further, the content may also be distributed to a mobile telephone and stored in a flash memory thereof, and the accumulation-oriented broadcast may thus be provided.

### <Other Modified Examples>

According to the embodiments discussed above, in the initializing process shown in FIG. 5, the content set in the accumulation-oriented broadcast receiving mode is recorded on the hard disk 22. The embodiment of the present invention is not, however, limited to this configuration. For example, the content set during initializing process may be recorded on a non-volatile accumulation medium such as the flash memory etc in place of the hard disk 22.

In the embodiment discussed above, as shown in FIG. 6, the head/tail addresses of the file area, the file accumulating location and the file name are given as the index information of the file container. The embodiment of the present invention is not, however, confined to this structure. For instance, the file accumulating location can be specified from only one set of the head/tail addresses of the file area or one set of the file accumulating location and the file name.

Further, the file accumulating location may be preset corresponding to the accumulation code. To be specific, the accumulating location may be predetermined corresponding to every accumulation code when allocating the new area shown in FIG. 12. In this case, none of the head/tail addresses of the file area, the file accumulating location and the file name are necessary as the index information.

According to the embodiment discussed above, the accumulation code shown in FIG. 6 consists of a 4-byte number for specifying an advertiser, and a 4-byte number for specifying an advertisement of every advertiser. The embodiment of the present invention is not, however, limited to this structure. Namely, the byte count of the accumulation code is not limited to 8 bytes. Further, the accumulation code is not required to be numerals but may be a character string. Moreover, instead of the accumulation code, the advertiser and the advertisement may be managed in a way that separates the information into information for specifying the advertiser and information for specifying the advertisement. In this case, there may be provided a table for relating the advertiser and the advertisement to each other.

In the embodiment discussed above, the CPU 23 changes the size of the exclusive management area 35 and the size of the user management area 36 in accordance with the command transmitted from the broadcasting station. The embodiment of the present invention is not, however, confined to this configuration. For instance, if a disk space gets deficient, the CPU 23 sends a message to the user, the existing file in the user management area 36 may be overwritten if the user gives an "OK" response.

Further, if a total size of the data stored in the exclusive area exceeds a limit of the exclusive area, the CPU 23 may extend the exclusive management area 35 by utilizing a free block of the user management area 36 and the existing file of the user management area 36.

According to the embodiment discussed above, the content distribution server 81 distributes the command (FIG. 22) to the set-top box 21 by making the use of the free band of the digital broadcasting waves. As a substitute for this, the content distribution server 81 may transmit the command via a network 50.

### <<Third Embodiment>>

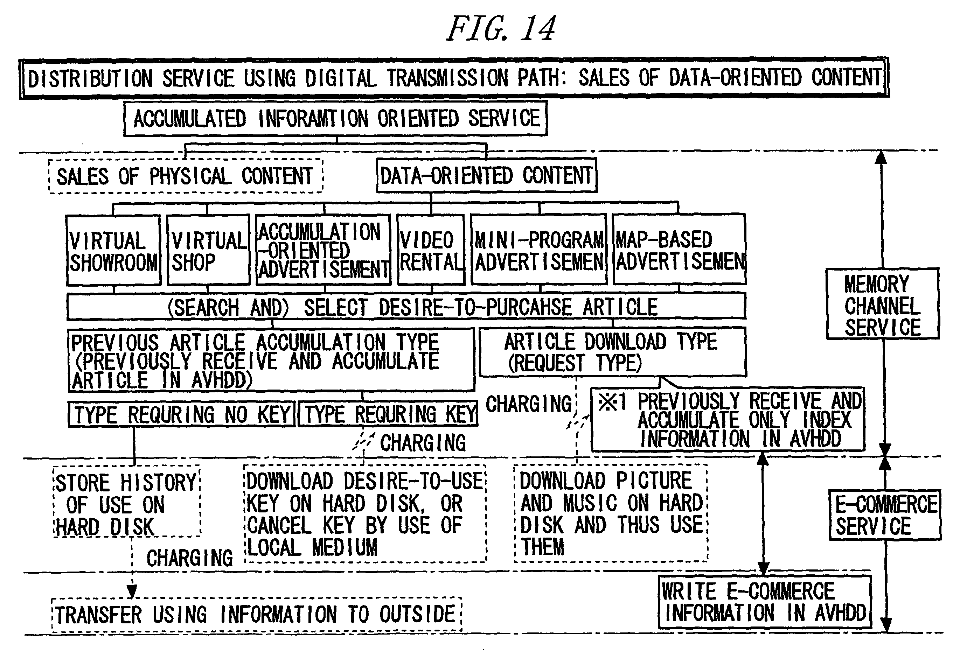

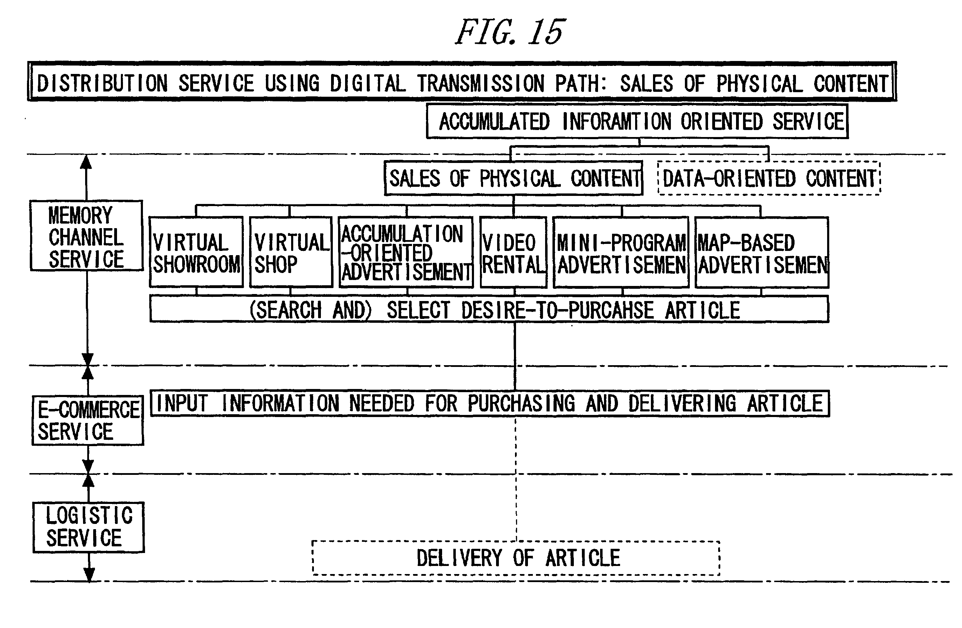

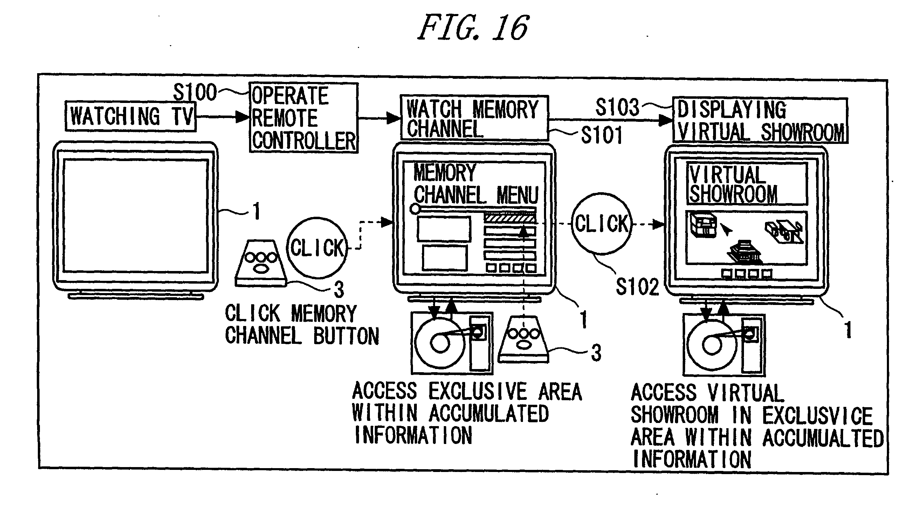

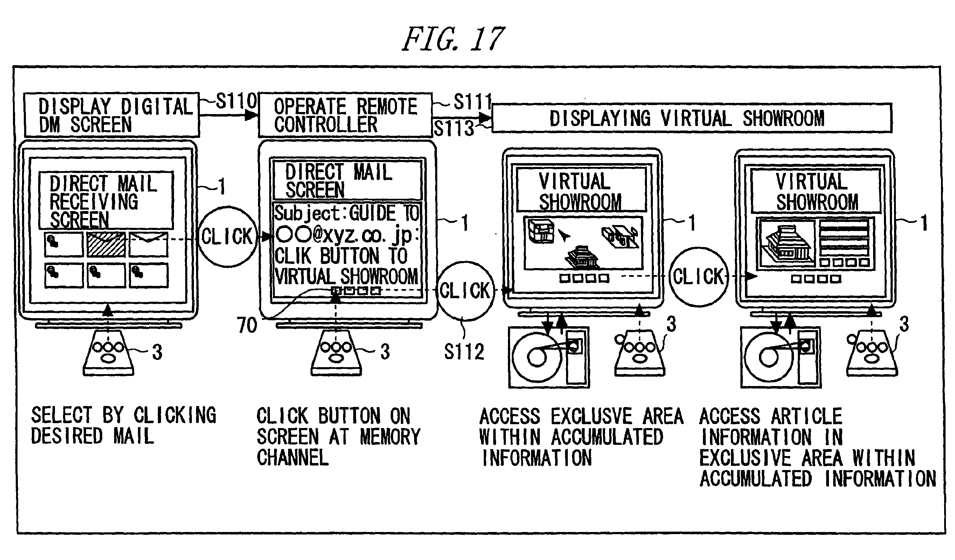

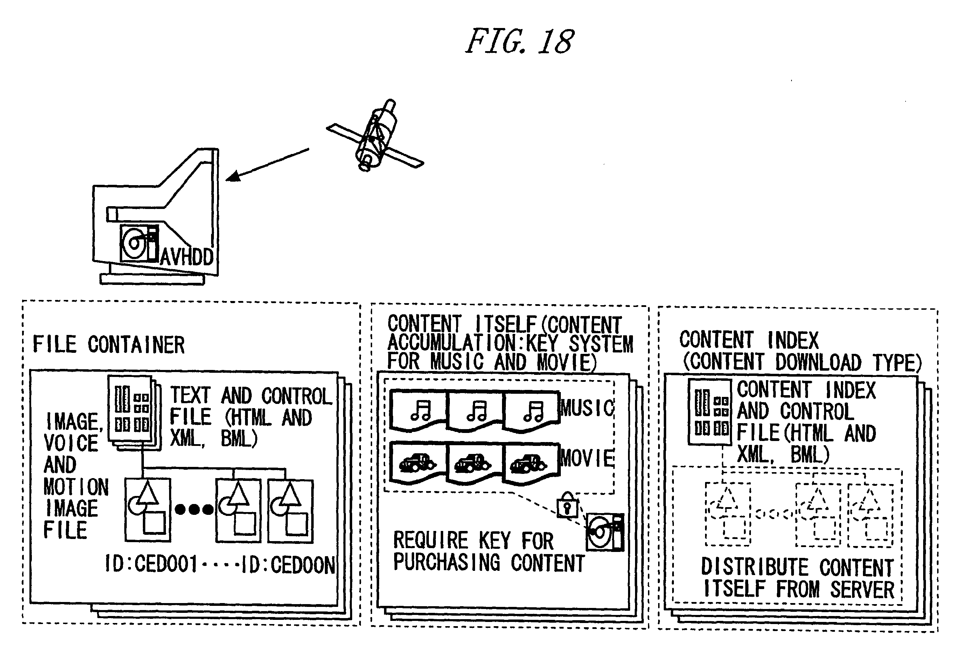

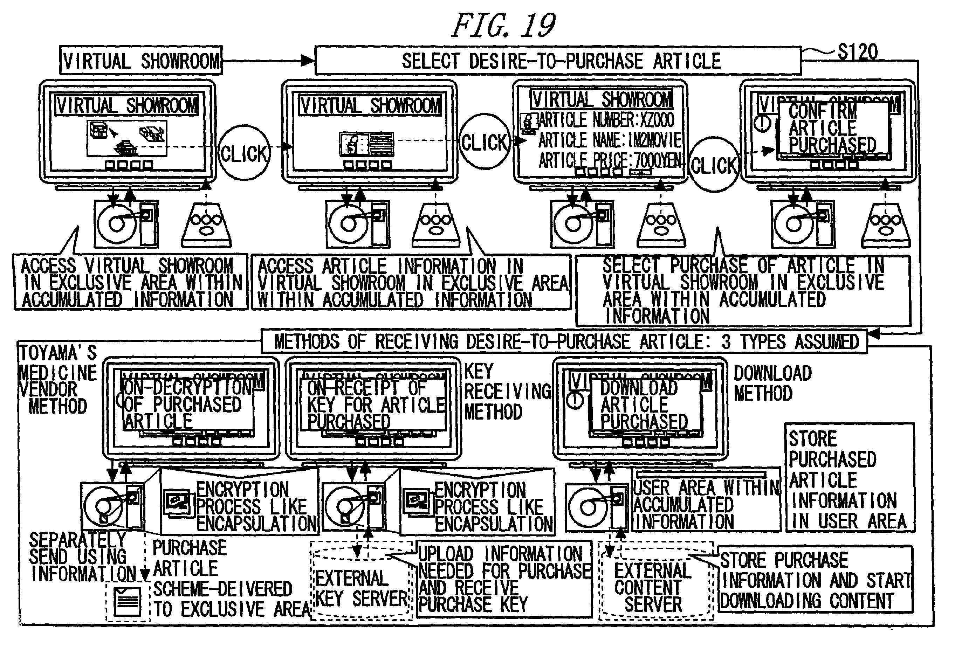

A third embodiment of the present invention will be explained with reference to FIGS. 14 through 19. FIGS. 14 and 15 are diagrams showing models of services in the broadcasting system in a third embodiment of the present invention. FIGS. 16 and 17 are diagram showing procedures of accessing the virtual showroom utilizing the TV system 1 included in this broadcasting system. FIG. 18 is a diagram showing a method of distributing a data-oriented content. FIG. 19 is a diagram showing a method of utilizing the data-oriented content.

The discussions in the first and second embodiments have been focused on the TV system 1 for receiving the accumulation-oriented broadcast, the set-top box 21 or the content distribution server 81. In the third embodiment, an example of the service provided by use of these systems will be explained. Accordingly, the architecture of the broadcasting system in the third embodiment is the same as those in the first and second embodiments. Then, FIGS. 1 through 13 will be referred to according to the necessity.

### <Models of Services>

FIGS. 14 and 15 show models of the services provided in the broadcasting system in the third embodiment. The present broadcasting system is configured by the TV system 1 explained in the first or second embodiment, or a television including the set-top box 21, and the content distribution server 81 for providing the services thereto (see FIG. 1 or FIG. 4).

In this broadcasting system, the broadcasting station or the content distribution server 81 provides an accumulated-information-oriented service. This accumulated-information-oriented service is a service provided in such a way that the information distributed is stored in the storage means 2 of the TV system 1, the hard disk 22 of the set-top box 21, or the removable medium 31, and the information stored so far in response to a user's operation through the remote controller 3 is displayed. This service is categorized into a data-oriented content providing service and a physical content providing service.

FIG. 14 is the diagram illustrating a model of the data-oriented content providing service. The data-oriented content is provided in the form of the virtual showroom, the virtual shop, the accumulation-oriented advertisement, a video rental, a mini-program advertisement and the map-based advertisement.

The virtual showroom is a virtual showroom displayed on the screen of the TV system 1 and so forth. Further, the virtual shop is what includes a means by which the article can be purchased in the virtual showroom. An indication of intention of the purchase is transferred to the content distribution server 81 via the network 50 shown in FIG. 4, and further transferred to the provider (advertiser) of the individual virtual shop.

The accumulation-oriented advertisement is an advertisement stored in the storage means 2, the hard disk 22 etc and displayed corresponding to attributes (an age, a distinction of sex, a family members etc) of the user.

The video rental is a service for having videos stored in the storage means 2, the hard disk 22 etc, and having the videos reproduced by the user's operation.

The mini-program advertisement is a shot term commercial inserted before and after programs or between.

The map-based advertisement is an advertisement displayed, when the user accesses an object (a building, a shop etc) on the map, in a way that relates the advertisement to the object on the map.

The user searches for and selects the desire-to-purchase article through a variety of services described above. Responding to this selection, the present broadcasting system provides the article by two types of methods.

One method is a service of a previous article accumulation type. This service is that the data-oriented content is distributed beforehand to the exclusive management area 35 unaccessible by the user.

Another method is a service of an article download type. The service of the article download type is that only the index for the article is distributed beforehand to the exclusive management area 35. The index information is displayed in response to the user's operation, and, when the user selects the article, the actual data-oriented content is downloaded.

There are prepared two types of methods of utilizing the article of the previous article accumulation type. One type is what does not need a key, wherein the content distribution server 81 is informed of a history of using the article stored in the exclusive management area 35 via the network 50, and this is charged a fee (which is called a previous retaining method or a Toyama's medicine vendor method).

Another type is what needs the key (which is called a key receipt method) . This service is that a key for decrypting the encrypted data-oriented content is distributed for a user's offer of purchasing the article. The key distribution is charged a fee. The user unlocks the data-oriented content by using this key, thereby utilizing the content.

FIG. 15 shows the model of the physical type content vending service utilizing a digital transmission path. Herein, the physical type content is defined as an object such as a toy, a book, foods, clothes, household articles, a medium recorded with the content and so on.

This service is substantially the same as the service shown in FIG. 14 as far as the processes up to the selection of the article are concerned. The user, after selecting the article, inputs the information necessary for a settlement, an address required for delivery thereof, or the information such as the registered ID etc. This is followed by a logistic service through which the article is delivered.

### <Example of Access to Virtual Showroom>

FIG. 16 is the diagram showing procedures of accessing the virtual showroom of the TV system 1 from a memory channel menu for selecting the accumulation-oriented broadcast.

The user selects a memory channel by use of the remote controller 3 (S100). Then, the memory channel menu is displayed on the screen of the TV system 1 (S101).

Next, the user selects a desired virtual showroom from the memory channel menu (S102). Then, the virtual showroom recorded in the exclusive management area is displayed on the screen of the TV system 1 (S103).

FIG. 17 is the diagram showing the procedures of accessing the virtual showroom from a digital direct mail.

The user, to begin with, selects a desired direct mail from a direct mail receiving screen (S110). Then, the selected direct mail is displayed on the screen of the TV system 1 (S111). A link 70 to the virtual showroom is displayed in this digital direct mail.

When the user clicks the link 70 (S112), the virtual showroom recorded in the exclusive management area is displayed on the TV system 1 (S113).

### <Method of Distributing Article>

FIG. 18 shows a method of distributing the data-oriented content purchased in the virtual showroom. The present broadcasting system distributes the data-oriented content by three types of methods.

A first method is a method based on the file container described in the second embodiment. According to this method, the index information and the content referred to from the index information are encrypted as a file container thus distributed. The content distributed is provided as a service object such as the virtual showroom shown in FIG. 14, the virtual shop and the accumulation-oriented advertisement. According to the first method, a plurality of contents are encrypted in one single file container and thus distributed.

A second method is a method of previously storing the content, and separately distributing a key for utilizing the content as the user intends to purchase. According to the second method, no charge control is done in circulating the content itself, and only the key distribution is charged a fee.

A third method is a method of previously distributing only an index of the content and, when the user shows an intention of purchasing, actually downloading the content.

### <Method of Utilizing Article>

FIG. 19 shows a method of utilizing the data-oriented content purchased in the virtual showroom.

The user at first selects the article (the data-oriented content) in the virtual showroom (S120). The data-oriented content selected in this way is distributed by the following three methods.

### (1) Previous Retaining Method (Toyama's Medicine Vendor Method)

If the data-oriented content selected by the user is categorized as an article that is scheme-delivered to the exclusive management area 35, a start of decrypting the article is triggered by this selection. After completing the decryption, the article is transferred to the user management area 36. Upon the transfer to the user management area or the actual use of the article, a notification of this use is sent to the content distribution server 81. The server 81 is notified of this use via an up line through the communication interface 27 and the network 50 (see FIG. 4).

The data-oriented content remains stored in the exclusive management area 35 till the user decrypts the data-oriented content, which is not recognized as a purchase thereof.

### (2) Key Receipt Method

As in the case of the previous retaining method, the data-oriented content is stored beforehand in the exclusive management area 35. When the user selects purchasing the data-oriented content, settlement information needed for the purchase is uploaded. Then, a decryption key necessary for decrypting the content is received in exchange of the settlement information.

### (3) Download Method

When the user selects the article in the virtual showroom, the content is downloaded from the content distribution server 81 via the network 50.

As discussed above, the broadcasting system in the third embodiment is capable of providing the service such as the virtual showroom, the virtual shop, the accumulation-oriented advertisement etc by utilizing the exclusive management area 35 of the storage means 2 or the hard disk 22.

The exclusive management area 35 is, as described in the second embodiment, defined as the area rented to the advertiser. Further, the content to be displayed may be selected from the exclusive management area 35 corresponding to the attributes (the age, the distinction of sex, the family member, a local area or the history of receiving the services provided, and so on) of the user of the TV system 1. For instance, an advertisement of a cosmetic suited to the age may be displayed, an advertisement of an automobile corresponding to the family members may be displayed, the showroom may also be configured according to the attribute, and so on.

### <<Fourth Embodiment>>

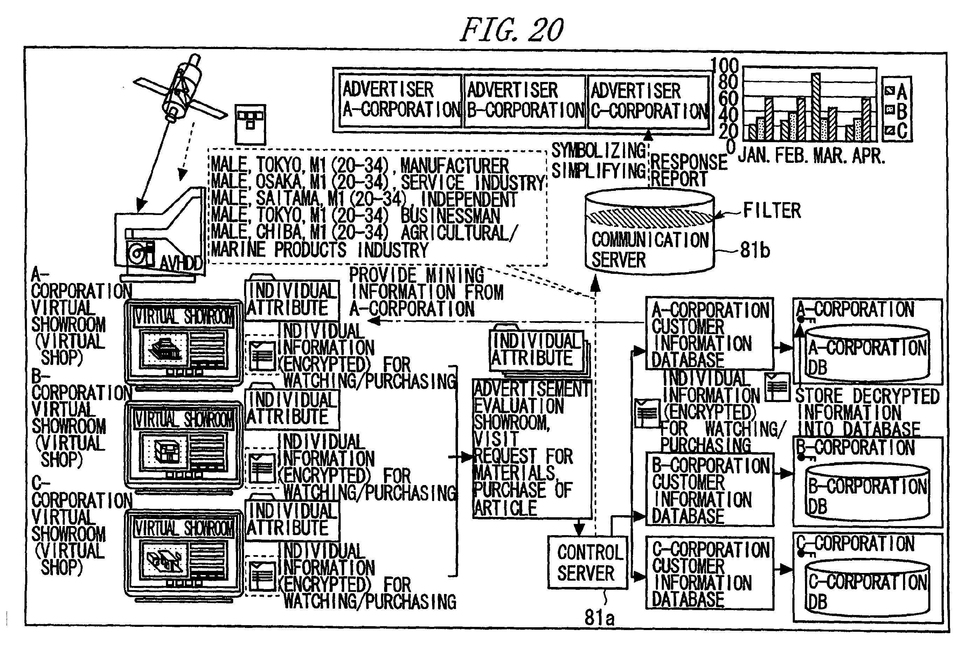

A fourth embodiment of the present invention will be explained referring to FIG. 20. The third embodiment has discussed the service provided by utilizing the broadcasting system discussed in the first embodiment or the second embodiment. The fourth embodiment will discuss a system for monitoring a user's access to the accumulation-oriented broadcast service, e.g., the virtual showroom or the virtual shop described in the third embodiment, and notifying the advertiser of this access.

The fourth embodiment also has the same architecture of the broadcasting system as those in the first through third embodiment, and hence the drawings in FIGS. 1 through 19 will be referred to according to the necessity.

In the TV system 1 according to the fourth embodiment, the user's history of purchasing the articles and audio-visual information such as the virtual showroom, the virtual shop and so on, is recorded in the exclusive management area 35. This history is a history of user's answering to questionnaires, a history of how frequently the user visited the showroom, a history of requesting the materials, and a history of purchasing the articles. This is called individual information.

This item of individual information, to which individual attribute data (the age, the distinction of sex, the family members, the resident area etc) are attached, is encrypted for every advertiser requesting an advertisement thereof, and periodically transmitted to a control server 81a connected to the network 50.

The control server 81a decrypts the individual information and the individual attribute data that are transmitted via the network 50, and transfers the decrypted information and data to a communication server 81b.

The communication server 81b symbolizes the transferred information and summarizes, as a response report, reactions (an answer rate of the user, the number of times of visiting the virtual showroom, sales of the articles etc) to every advertisement. This response report is distributed to each advertiser and utilized as an index to a next advertisement.

On the other hand, the control server 81a transfers the individual information directly to every advertiser. The individual information is decrypted in a computer used individually by the advertiser, and stored in a database.

Hence, according to this broadcasting system, each advertiser can gather actual responses of the users to the sponsor's own advertisement and the virtual showroom within a short period of time.

Further, the individual information is encrypted for every advertiser and thus transmitted, and therefore, even if information on the privacy is contained, the information is not leaked to the third party. Hence, when a trustworthy relation between the advertiser and the users is established, the advertiser can grasp a detailed tangible trend of the users.

### <<Fifth Embodiment>>

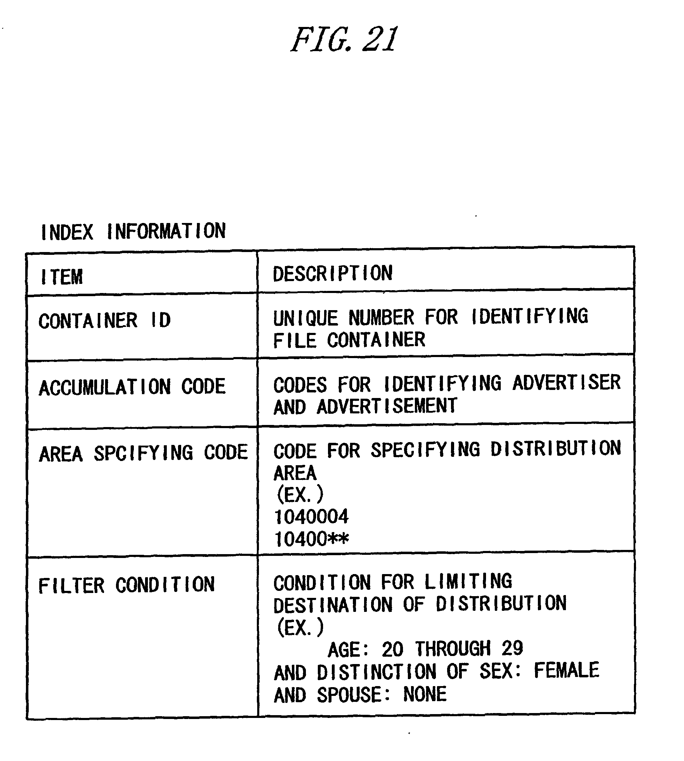

A fifth embodiment of the present invention will hereinafter be described with reference to FIG. 21. In the second embodiment, the accumulation code is provided as the index information of the file container. Then, if the advertiser retained in the set-top box 21 matches with the accumulation code, the set-top box 21 accumulates the content in the predetermined area.

The fifth embodiment will explains an example of restricting the destinations to which the content is distributed on the basis of the local areas and the attributes of the users. Other configurations are the same as those in the second embodiment, and hence the drawings in FIGS. 4 through 13 will be referred to according to the necessity.

FIG. 21 is a diagram showing a structure of the index information encrypted together with the content in the fifth embodiment.

The index information contains a container ID, an accumulation code, an area specifying code, and a filter condition (at least one of the container ID, the accumulation code, the area specifying code and the filter condition, corresponds to control information). The container ID and the accumulation code among these pieces of data are the same as those in the second embodiment, and hence the explanations thereof are omitted.

The area specifying code is data for specifying an area to which the content is distributed. If this area specifying code is "NULL", the area specified is nationwide. By contrast, if a predetermined area code is specified in this "area specifying code" field, only the set-top boxes 21 existing in this area accumulate the content, while the set-top boxes 21 existing in other areas discard the file container distributed.

This area specifying code may involve the use of a post code in the fifth embodiment. If all the digits of the post code are specified, only the set-top boxes 21 installed in the area specified by this post code accumulate the file content distributed.

If the post code contains a character ("*") specifying an arbitrary numeral and when "*" is replaced with any one of numerals of 0 through 9, the content is accumulated in the set-top boxes 21 existing in the area specified by the thus obtained post code. For instance, 10300** is specified as an area specifying code, the content is accumulated in the set-top boxes 21 existing in the areas specified by the post codes of 1030000 through 1030099.

The filter condition is a condition for specifying an attribute of the user of the set-top box 21. As shown in FIG. 21, the filter condition is described in an attribute-to-value form. This attribute-to-value form may involve the use of a logical expression linked by an AND or OR logic operator.

For example, if "age: 20 through 29 AND distinction of sex: female AND one's spouse: none" is specified as a filter condition, the set-top box 21 develops this logical expression, and accumulates the content on condition that the user is limited to an unmarried female in her twenties.

Thus, the area specifying code and the filter condition are specified in the distribution system 81, and the set-top box 21 is schemed to select and receive the specified content, whereby this specified content can be distributed to the users residing in the desired areas and having the desired attributes.

### <Modified Examples>

In the embodiment discussed above, both of the area specifying code and the filter condition are set in the index information. The embodiment of the present invention is not, however, limited to this structure. For instance, any one of the area specifying code and the filter condition may also be set therein. Further, the area specifying code is set as one of the filter conditions, and it may be specified such as "area: area code".

In the embodiment discussed above, the area specifying code involves the use of the post code. The embodiment of the present invention is not, however, confined to this structure. For example, the area specifying code may involve the use of a combination of out-of-town and in-town telephone exchange numbers of a telephone number. Further, the area specifying code may be used in a way that allocates a special-purpose code to every area.

In the embodiment discussed above, the filter condition is specified by the logical expression containing "attribute: value". The embodiment of the present invention is not, however, limited to this structure. For example, the filter condition may involve the use of fixed position parameters. The position parameters take, for instance, such a form that a first parameter is a lower limit of age, a second parameter is an upper limit of age, a third parameter is a distinction of sex, a fourth parameter is given by showing whether the user has his or her spouse, and a fifth parameter is a job classification.

### Industrial Applicability

The present invention can be carried out in the industry of manufacturing the receiver for receiving the digital broadcast such as the TV receiver etc, in the industry of manufacturing the broadcast communication equipment such as the broadcasting equipment for the digital broadcast or the content distribution equipment, and in the service industry for providing the content through on the digital broadcast.

## Claims

1. A television system comprising:
storage means for storing information forcedly directly stored through on digital broadcasting waves, said information sorted according to codes and selectively received by a viewer.

2. A television system according to claim 1, wherein the information is life information necessary for a person to use for a life and an advertisement for providing the life information free of charge.

3. A television system according to claim 1, wherein said storage means serves as a virtual showroom for an E-commerce or as a receipt box.

4. A television system according to claim 1, wherein a part of said storage means is segmented for a forced accumulation as an exclusive area.

5. An accumulated information broadcasting method comprising:
making a viewer selectively receive a program through on digital broadcasting waves;
directly forced storing the program in storage means of a television system; and
broadcasting a content stored therein by an on-demand system.

6. An accumulated information broadcasting method according to claim 5, wherein a content stored and invoked by the on-demand system is individually schemed.

7. An information display system for displaying plural categories of information received via a transmission path, comprising:
selecting means for selecting a specified category of information among the plural categories of information;
storage means for storing the information selected by said selecting means;
display indicating means for indicating displaying the information stored in said storage means; and
display means for displaying the information on the basis of said display indicating means.

8. An information display system according to claim 7, wherein said storage means is segmented into an arbitrary area in which the stored information can be updated by external operation means provided in said information display system, and an exclusive area, distinguished from said arbitrary area, in which the stored information can not be updated by said external operation means.

9. An information display system according to claim 8, wherein the plural categories of information contain information on a distribution requester of the information, and
said selecting means selects the information requested by a predetermined distribution requester.

10. An information display system according to claim 8, wherein said exclusive area is further segmented into predefined areas, and
said selecting means selects, among the plural categories of information received, the information having a category mapped to each of the predefined areas, and makes said storage means store the selected information.

11. An information display system according to claim 9, further comprising:
means for encrypting the data for the respective distribution requesters; and
transmitting means for transmitting the information,
wherein said storage means stores a history of accesses through said display indicating means with respect to the information for the respective distribution requesters,
said encrypting means encrypts the access history for the respective distribution requesters, and
said transmitting unit transfers the encrypted access history to the distribution requester.

12. An information format of information transmitted via a transmission path to an information display system comprising storage means segmented into predetermined areas,
wherein the information contains specifying information for specifying a should-be-stored area.

13. An information format according to claim 12, wherein the information is audio visual information.

14. A distribution system for distributing information to an information display system comprising selecting means for selecting a specified category of information among plural categories of information received via a transmission path, and storage means for storing the information selected by said selecting means,
wherein the information contains a content serving as an output object to said information display system and control information serving as a selection basis for said selecting means.

15. A distribution system according to claim 14, wherein said storage means is segmented into predefined areas, and
the information is distributed in a way that specifies an area in which the information should be stored.

16. A distribution system according to claim 14, further comprising a distribution management unit for storing an identifier of the predefined area and specifying information of the information distributed in a way that specifies its area.

17. A distribution system according to claim 14, further comprising a segmentation indicating unit for indicating said information display system to segment said storage means thereof into an arbitrary area in which the stored information can be updated by an external operation means provided in said information display system, and an exclusive area, distinguished from said arbitrary area, in which the information can not be updated by said external operation means.

18. A distribution system according to claim 14, further comprising a delete indicating unit for indicating said information display system to delete the stored information.

19. An information distribution method of distributing plural categories of information via a transmission path and having a destination of the distribution select the information, said method comprising:
a step of inputting a content serving as a distribution object;
a step of generating control information serving as a basis of selecting the content; and
a step of combining the content with the control information.

20. An information distribution method according to claim 19, further comprising a step of making the destination of the distribution segment storage means for storing information into predefined areas.

21. An information distribution method according to claim 19, further comprising a step of specifying, to the destination of the distribution, an area in which the information should be stored.

22. An information distribution method according to claim 19, further comprising a step of making the destination of the distribution delete the distributed information.

23. An access history collecting method of collecting a history of accesses to plural categories of information requested for distribution by a distribution requester, said method comprising:
a step of selecting information requested for distribution by a specified requester among the plural categories of information;
a step of storing the selected information;
a step of detecting an indication of displaying the stored information;
a step of recording a history of the display indication for the respective distribution requesters;
a step of encrypting the history of the display indication for the respective distribution requesters; and
a step of transmitting the encrypted history of the display indication to the requester.

24. A television system comprising:
storage means segmented and given to an information provider, the segmented area being defined by an identifier,
wherein said storage means forcedly stores every segmented area defined by the identifier with received information through on digital broadcasting waves.
